# EUROPEAN PATENT APPLICATION

(11) **EP 1 205 843 A2**
(43) Date of publication of application: **15.05.2002**
(21) Application number: 01309521.1
(22) Date of filing: 12.11.2001
(51) Int. Cl.: G06F 9/44

(54) **User interfaces**

(30) Priority: 13.11.2000 GB 0027685; 31.10.2001 GB 0126200
(71) Applicant: CANON KABUSHIKI KAISHA, Tokyo (JP)
(72) Inventor: McLean, Alistair William, Bracknell, Berkshire RG12 2XH (GB)
(74) Representative: Beresford, Keith Denis Lewis

(57) **Abstract**

A user interface apparatus for enabling a user to communicate with a processor-controlled machine has a user interface definer with a communicator (73a) for communicating with the processor-controlled machine to enable the user of the user interface to cause the processor-controlled machine to carry out a function;
a receiver (73a) for receiving device description data provided by the processor-controlled machine and defining the functional capabilities of that processor-controlled machine;
a user interface element accesser (73c, 73d) for accessing user interface element data defining user interface elements that can be used to form a user interface;
an associater (73b) for associating the functional capabilities in the received device description data with user interface elements defined by the user interface element data; and
a generator (73e, 73f) for generating user interface data defining a user interface using the user interface element data for the user interface elements associated with the functional capabilities defined by the device description data.

## Description

The present invention relates to apparatus and methods for providing user interfaces for enabling a user to control a function or operation of a processor-controlled machine such as an item of office equipment.

Processor-controlled machines such as items of office equipment, for example printers, scanners and photocopiers, are generally each provided with their own machine-specific user interface. These user interfaces differ markedly not only between machines carrying out different functions (that is between printers, scanners, photocopiers, fax machines and so on) but also between different machines capable of carrying out the same function. Thus, for example, photocopiers supplied by different manufacturers will generally have different user interfaces.

Providing these different user interfaces is costly. Moreover, the end user has to learn how to use the user interface each time he or she encounters a new machine or each time a machine is upgraded. Furthermore, designing or modifying user interfaces may increase the time to market for the processor-controlled machine.

An aspect of the present invention provides a user interface device that provides a user interface for a processor-controlled machine from data describing the functions available on that processor-controlled machine so that it is not necessary for the processor-controlled machine to have its own user interface. Rather, the processor-controlled machine need merely be provided or associated with a description of its functionality from which the user interface can be generated.

The user interface device may provide user interfaces for a number of different processor-controlled machines from, in each case, the description of the functionality of the corresponding processor-controlled machine. The user interface device may enable different user interfaces for different processor-controlled machines to have the same look and feel, thereby facilitating their use.

The user interface device may generate the user interface itself from the device description or may be couplable to a separate user interface generator that generates the user interface from the device description and then supplies it to the user interface device. The user interface generator may be coupled to the user interface device directly or via a network.

The user interface device may also have facilities for enabling a user to set personal preferences which may be reflected in all of the user interfaces generated by the user interface device.

A user interface device embodying the invention thus enables the functionality of a processor-controlled machine to be separated from its user interface so that the presentation of user interfaces for different processor-controlled machines may be configured to have a similar look and feel to the end user and may also be personalised to the requirements of the end user. Furthermore, this separation of the functionality of the processor-controlled machine from its user interface means that the manufacturer of the processor-controlled machine does not need to design a specific user interface for each specific processor-controlled machine. This separation of the functionality of the processor-controlled machine from its user interface also facilitates adaptation of processor-controlled machines to meet local requirements, for example to enable different language versions of a user interface to be provided for different language speaking countries while still providing a generic processor-controlled machine.

The user interface device may be used with stand-alone processor-controlled machines such as printers, copiers, scanners etc. or may be used where a number of processor-controlled machines are coupled to a network such as a local or wide area network. In this case, the user interface device may communicate with a processor-controlled machine either directly or via the network.

In an embodiment, a user interface application defining a user interface device is implemented as a series of filters. As used herein, the term filter refers to an independent software component or processing module having a specific processing function or functions that can be coupled in a series connection with other processing modules each adapted to carry out a different processing function or functions with each individual processing module carrying out its processing function or functions only on the type of data for which it was designed. These processing functions may include, for example, filtering out or modifying a certain type of data or carrying out certain processing steps when a certain type of data is received. Data of a type that a particular processing module is not designed to process is passed by that processing module on to the next processing module or filter in the filter sequence.

Embodiments of the present invention will now be described, by way of example, with reference to the accompanying drawings, in which:
Figure 1 shows a block diagram of a network system embodying the present invention;
Figure 2 shows a functional block diagram of a processor-controlled machine of the network system shown in Figure 1;
Figure 3 shows a functional block diagram of a user interface device (UID) embodying the present invention;
Figure 4 shows a block diagram of a personal computer (PC) of the system shown in Figure 1;
Figure 5 shows a diagrammatic representation of a user instructing a processor-controlled machine to carry out a function using a user interface device embodying the present invention;
Figures 6a and 6b show diagrammatic representations of printer and fax user interfaces that may be presented to a user by a user interface device embodying the present invention;
Figure 7 shows a functional block diagram of a user interface application generation apparatus for generating a user interface application for a user interface device;
Figure 8 shows a display screen of a graphical user interface of the apparatus shown in Figure 7;
Figure 9 shows a schematic block diagram illustrating a series of filters forming a user interface application generated using the apparatus shown in Figure 7;
Figure 10 shows a display screen for enabling company personalisation;
Figures 11 to 15 show display screens illustrating different tabbed panes for setting user preferences; and
Figures 16 to 23 show flowcharts and diagrams for explaining the operation of a user interface device embodying the invention;
Figure 24 shows a diagrammatic representation of another example of a printer interface that may be presented to a user by a user interface device embodying the present invention;
Figure 25 shows a schematic block diagram similar to Figure 9 of a series of filters forming another example of a user interface application generated by the apparatus shown in Figure 7;
Figure 26 shows a diagrammatic representation of another example of a printer interface that may be presented to a user by a user interface embodying the present invention;
Figure 27 shows a block diagram of another example of a network system embodying the present invention;
Figure 28 shows a schematic block diagram similar to Figure 9 of a series of filters forming another example of a user interface application generated by the apparatus shown in Figure 7;
Figure 29 shows a schematic block diagram similar to Figure 9 of a series of filters forming another example of a user interface application generated by the apparatus shown in Figure 7;
Figure 30 shows a diagrammatic representation of a display of a user interface device embodying the present invention showing tabbed printer and fax user interfaces; and
Figures 31a and 31b show diagrammatic representations of a scanner user interface that may be presented to a user by a user interface device embodying the present invention.

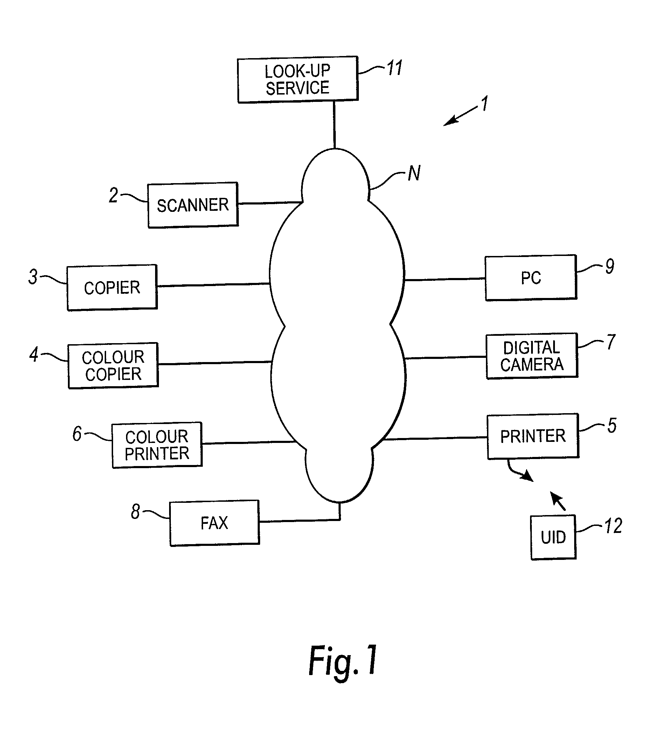

Referring now to the drawings, Figure 1 shows a block schematic diagram of a network system 1 comprising a network N coupled to a number of different processor-controlled machines in the form of items of office equipment that will, in practice, be distributed throughout the building or buildings within which the network N is installed. The network N may be a local area network (LAN) or a wide area network (WAN), for example. It should, of course, be understood that, as used herein, the word network does not imply the use of any known or standard networking system or protocols and that the network may be any arrangement that enables communication between physically separate processor-controlled machines.

As shown in Figure 1, the processor-controlled machines coupled to the network N comprise a scanner 2, a black and white photocopier (copier) 3, a colour photocopier (colour copier) 4, a black and white printer 5 such as a laser printer, a colour printer 6 such as a colour ink jet printer, a digital camera 7, a facsimile machine (fax) 8 and a personal computer (PC) 9. A look-up service 11 that provides a registry of services available on the network is also coupled to the network.

In this system, a user instructs a processor-controlled machine to carry out a desired function by using a user interface device (UID) 12 that communicates directly with the processor-controlled machine by a wireless communications link WL, such as a radio link using a standard protocol communication system such as, for example, Bluetooth (TM).

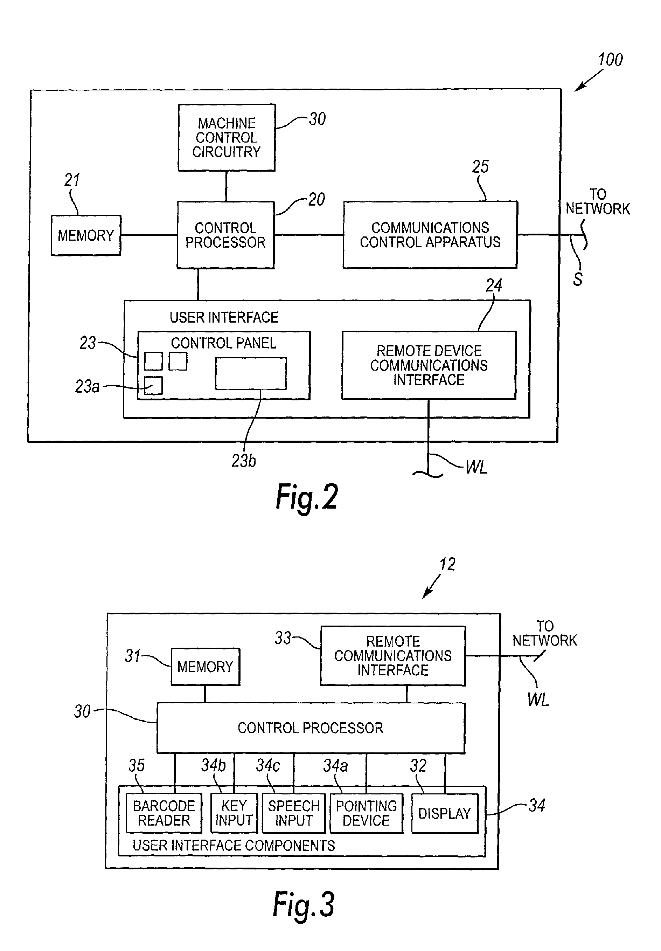

Figure 2 shows a schematic block diagram of a generic processor-controlled machine 100, that is Figure 2 represents the functional components that each of the processor-controlled machines shown in Figure 1 will be provided with. The processor-controlled machine 100 comprises a control processor 20 having associated memory 21 (ROM and/or RAM)and a user interface 22 comprising a control panel 23 having, typically, operation buttons 23a and a display panel 23b for enabling manual input of instructions in conventional manner. The processor-controlled machine also includes machine control circuitry 30 that controls operation of the machine function(s). Thus, for example, in the case of a photocopier, the machine control circuitry 30 will comprise optical drive circuitry for controlling illumination of a document to be copied, exposure and development control circuitry for controlling and charging an exposure of the photosensitive drum and development of the resulting toner image and paper transport circuitry for controlling transport of paper through the copier. As thus far described, the processor-controlled machine 100 is a conventional processor-controlled machine with the control processor 20 being programmed in known manner to instruct the machine control circuitry 30 to carry out specific functions in accordance with instructions input by a user using the control panel 23.

In addition to the abovementioned conventional components, the user interface 22 also includes a remote device communications interface 24 for communicating with the user interface device 12 via the wireless link WL in accordance with the standard protocol and a communications control apparatus 25 that provides an interface between the control processor 20 and the network N and between the control processor 20 and the remote device communications interface 24. In this embodiment, the network is designed to function in accordance with the JAVA operating platform and the communications control apparatus 25 is, in this embodiment, a JAVA virtual machine comprising processor capability and memory (RAM and/or ROM and possibly also hard disk capacity) storing program instructions and data for configuring the virtual machine to enable communication between the control processor 20 and the user interface device 12 via the remote device communications interface 24 and to enable communication over the network N.

Figure 3 shows a schematic block diagram of the user interface device 12. This device consists of a control processor 30 having associated memory (ROM and/or RAM) 31, a remote communications interface 33 for communicating with a remote device communications interface 24 of a processor-controlled machine 100 via the wireless link WL and user interface components 34 including a a display 32 (such as an LCD display) and a pointing device input 34a. In this example, the display 32 is a touch screen display. The user interface components may also include a keypad input which may be in the form of a full QWERTY keyboard or a set of functional keys 34b. In addition, the user input interface may include a speech input interface 34c. In this example, the user interface device 12 also includes a bar code reader 35.

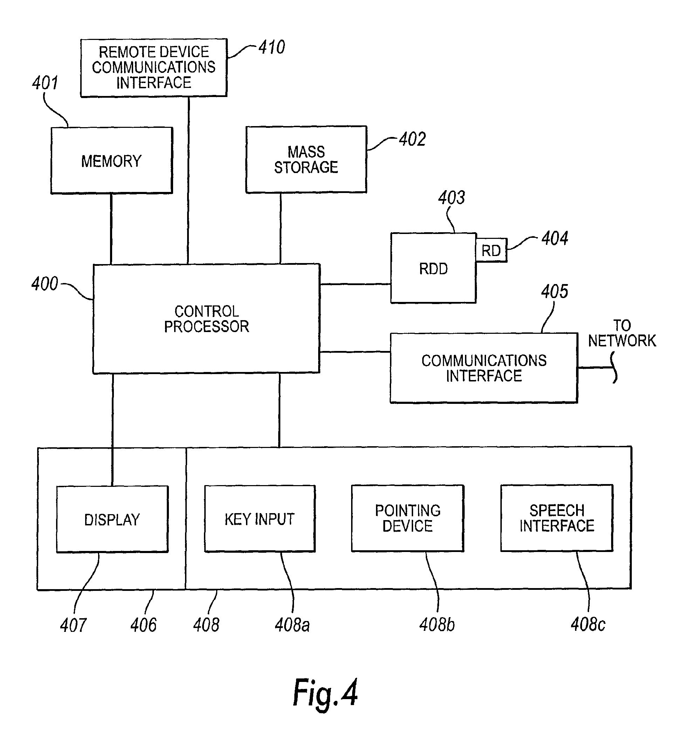

Figure 4 shows a schematic block diagram of a personal computer 9 that may be coupled to the network N and like the JAVA virtual machines of the processor-controlled machines is programmed, at least insofar as communications with the network are concerned, to operate in accordance with the JAVA platform. The personal computer includes a control processor 40 with associated memory 401 (ROM and/or RAM), a mass storage device 402 such as a hard disk drive, a removable disk drive (RDD) 403 for receiving a removable disk (RD) 404 such as, for example, a CD ROM, DVD or floppy disk drive, a network communications interface 405 for enabling communication over the network N and a user interface 406 consisting of a display 407 such as a CRT or LCD display screen and a user input interface 408 consisting of, in this example, a key input in the form of a full qwerty keyboard 408a, a pointing device 408b such as a mouse and a speech interface 408c including a microphone. The personal computer 9 also includes a remote device communications interface 410 for communicating via a wireless link with, for example, the user interface device 12.

The look-up service 11 may be provided by a personal computer or other computing apparatus and is, in this embodiment, configured as a JINI look-up service.

The processor-controlled machines, user interface device 12 and computer 9 are configured by processor-implementable instructions and data that may be prestored in memory or supplied as a signal S over the network N from another source such as a computer or, in the case of the computer 9, downloaded from a removable disk 44. The user interface device may, although not shown, also be provided with removable storage media in the form of, for example, flash memory cards, in which case the user interface device 12 may be programmed by program instructions and/or data downloaded from such a removable storage medium.

Each device or machine coupled to the network registers itself with the JINI look-up service 11 when coupled to the network and is automatically unregistered if disconnected from the network or powered down. The JINI look-up service thus has an up-to-date registry of devices and machines coupled to the network.

The memory 401 of each processor-controlled machine contains a description of the functions that the machine can carry out (hereinafter referred to as the "device description").

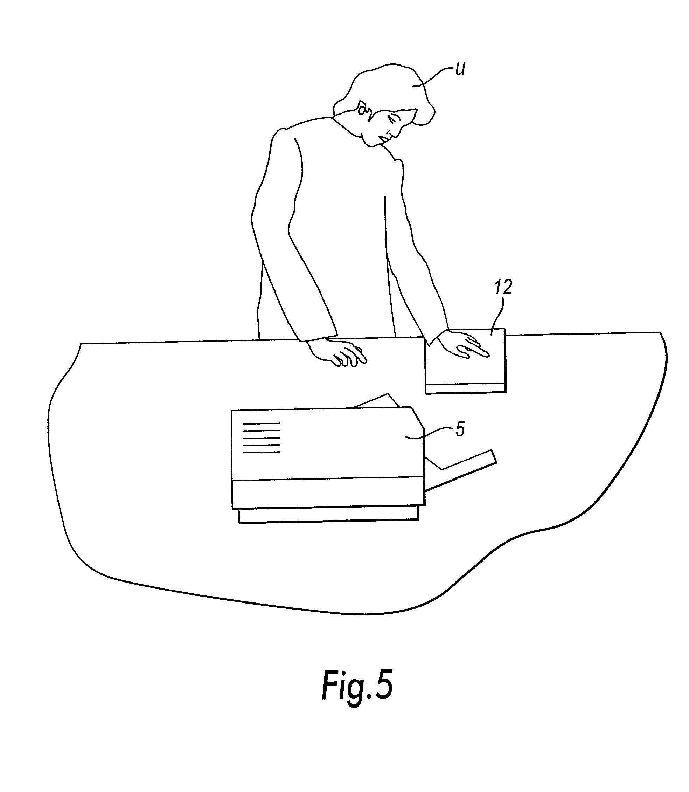

As will be explained in greater detail below, when a user wishes to use his or her user interface device 12 to control a function of a processor-controlled machine coupled to the network N, then, in this embodiment, as shown schematically in Figure 5, the user U approaches the desired processor-controlled machine, for example the printer 5, and the user interface device 12 is activated.

Once the user interface device 12 has established communication with the printer over the wireless link WL, the user interface device 12 sends out a message via the communications control apparatus 25 of the printer searching for a network and, once it has established communication with the network N, registers itself with the look-up service 11 and obtains from the look-up service 11 a list of processor-controlled machines coupled to the network N with the processor-controlled machine through which the user interface device 12 is communicating with the network being placed at the top of the list.

The user interface device 12 can then obtain the device description for the processor-controlled machine through which it is communicating with the network from that processor-controlled machine. Each device description consists, in this embodiment, of an XML (extensible Markup Language) document describing the functions of the corresponding processor-controlled machine.

The user interface application of the user interface device 12 then maps these functions on to possible user interface widgets each of which is associated with the program code necessary to generate the corresponding widget on the display screen. As used herein the term "widget" means any element of a graphical user interface (GUI) that displays information or provides a specific way for a user to interact with an operating system and/or application. Examples of widgets are icons, pull down menus, buttons, selection boxes, progress indicators, on-off check marks, scroll bars, windows, window edges (that let you re-size the window), toggle buttons, forms, combo boxes (a window, often within a dialogue box, that is both a scrollable list and a field where text can be entered) and so on.

Having obtained a list of possible widgets for forming a user interface representing the functions that the processor-controlled device can carry out, the user interface application on the user interface device 12 then filters the available possible widgets in accordance with widget preference information (which may, as will be seen below be determined by any one or any combination of the supplier or manufacturer of the user input device 12, the supplier or manufacturer of the processor-controlled machine, and the actual end user) and constructs a user interface consisting of one or more user interface panes in accordance with layout information and style/rendering information (both of which may be determined by a supplier or manufacturer, the end user or combination of these) to generate the final user interface that is displayed to the user on the display 32 of the user input device.

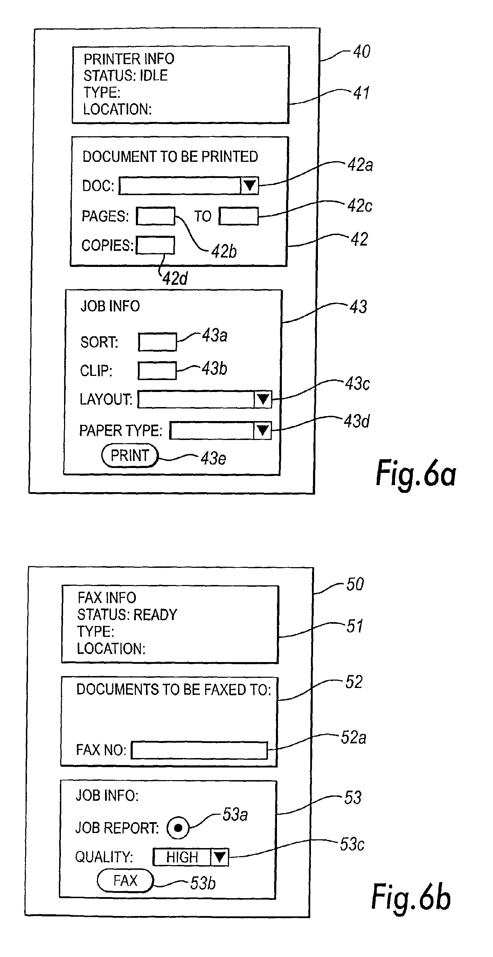

Figure 6a shows a display screen 40 representing a user interface that may be displayed on the display 32 of the user interface device 12 where, as shown in Figure 5, the processor-controlled machine is the printer 5. As can be seen, the display screen consists of three panes 41, 42 and 43 which are shown simultaneously one above another with the top pane 41 displaying printer status information provided by the printer to the user interface device 12 and the second and third panes 42 and 43 displaying information regarding the document to be printed and details of the manner of printing (the printer "job info"), respectively. The panes 42 and 43 each include widgets using which a user can input information. In the case of the pane 42, these include windows 42a, 42b, 42c and 42d for enabling a user to input information identifying the file name of the document to be printed, the pages of the document to be printed and the number of copies required, respectively.

In the case of pane 43, the widgets include check boxes 43a and 43b for enabling the user to select whether or not the printed copies are sorted and clipped or stapled, a drop down menu 43c for selecting a layout option (such as double-sided printing, two pages side-by-side, single-sided printing and so on), a paper type drop down menu 43d for enabling a user to select the paper type (such as A4, A3, foolscap, letter etc.) and a print button 43e for enabling a user to initiate a printing operation once all the necessary information has been entered.

Figure 6b shows another display screen 50 that may be displayed on the display 12 when the processor-controlled machine 100 that the user wishes to interface with is the fax machine 8. As can be seen from a comparison of Figures 6a and 6b, the two user interfaces have a very similar look and feel with the display screen 50 also presenting three panes 51, 52 and 53 for status, document and job information, respectively. In this case, the document information pane 52 includes a window 52a for enabling a user to identify the fax number to which a document placed on the fax machine 8 is to be transmitted and the job information window 53 includes a radio button 53a for enabling a user to select whether or not they wish to have a printed job report from the fax machine 8, a fax button 53b for instructing initiation of the faxing process and a quality selection drop down menu 53c for selecting the quality of the fax transmission (i.e. the document scanning resolution and so on).

In the present embodiment, the user interface application of the user interface device 12 is assembled as a sequence of predefined filters in the manner described in detail in our co-pending UK Patent Application No. 0027685.7 filed on 13 November 2000, the whole contents of which are hereby incorporated by reference. Each of the filters is adapted to carry out a specific processing function or functions with each individual processing module carrying out its processing function or functions only on the type of data for which it was designed so that data of a type that a particular processing module is not designed to process is passed by that processing module on to the next processing module or filter in the filter sequence. Also, as described in our co-pending UK Patent Application No. 0027685.7, each of the filters is bi-directional enabling data to be passed both up and down a stack of filters along a bi-directional data path. This may be achieved by, as described with reference to Figures 32 and 33 of UK Patent Application No. 0027685.7, providing separate up and down data channels and, in some cases, constructing a filter as two sub-filters having a shared state, that is a shared memory that can be accessed by both sub-filters.

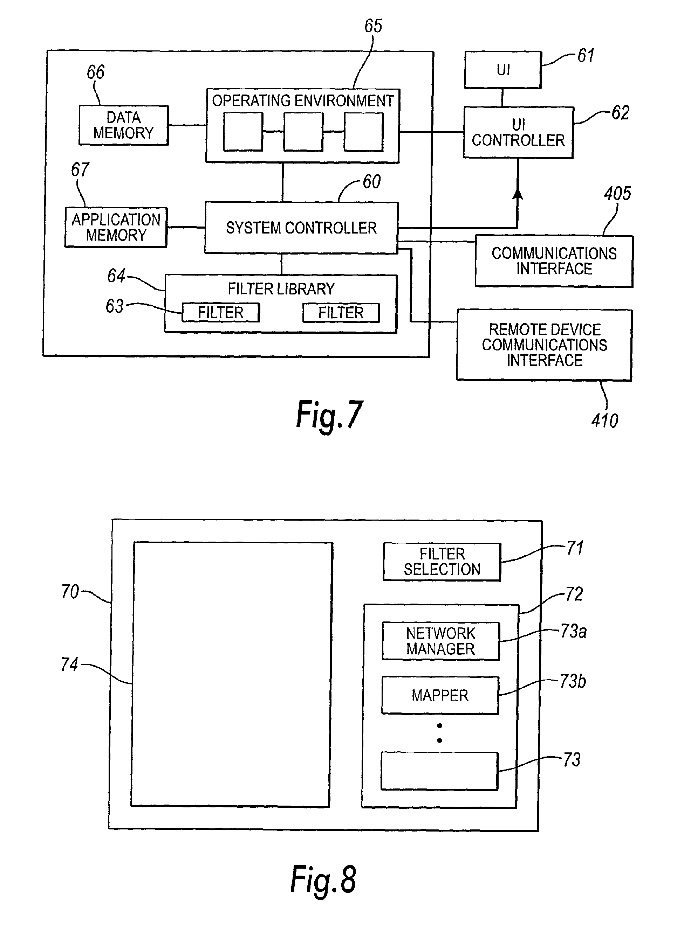

Briefly, generation of the user interface application involves use of a user interface application generation apparatus that is provided by configuring a computer, such as the computer 9 shown in Figure 1, with program instructions and/or data to provide the apparatus shown in Figure 7 which consists of a system controller 60 which is responsive to user commands received from a user interface (UI) 61 via a user interface (UI) controller 62 to load a user selection of filters 63 from a filter library 64 into an operating environment 65 in which the filters are arranged in a user-determined sequence. Data to be processed by the user interface application is stored in a data memory 66. The user interface application may be stored in an application memory 67 for later retrieval for example for updating or modification.

Figure 8 illustrates a typical display screen 70 that may be displayed to the applications developer using the apparatus shown in Figure 7 via the user interface 61. This display screen includes a filter selection button 71 which, when selected by the user, takes the user to a filter selection screen that enables the user to select a filter for incorporation in the user interface application from the filter library 64. A filter sequence display window 72 displays, for each selected filter (in the interests of clarity only some of the selected filters are shown in Figure 8), a filter box 73 containing text identifying the filter represented by the filter box and indicating any required input parameters, such as user input. The filter boxes are arranged in the sequence required for the filters in the final application. This order may be determined by the order in which the user selects the filters. Additionally, the user may be able to drag and drop the filter boxes so as to rearrange the selected filters in the window 72. At least some of the filters will have parameters or options that can be selected by the user interface applications developer and, for this purpose, when the user selects a particular filter, a corresponding user interface will be displayed in a filter user interface window 74 to enable the developer to select the required parameters or select the required options.

The user interface application once generated may be installed on the user interface device 12 in conventional manner, for example by downloading the user interface application via a communications link between the remote device communication interfaces 33 and 410 of the user interface device 12 and the computer 9 or by using a conventional EPROM burner to burn the user interface application into a ROM to be installed in the user interface device 12, for example.

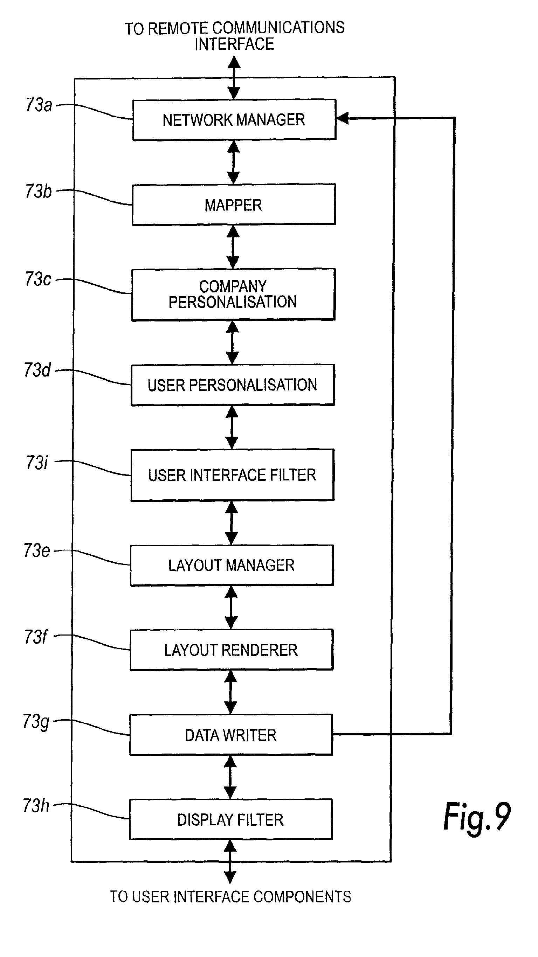

An example of a user interface application produced by selecting filters to form a filter stack or pipeline will now be described with reference to Figure 9.

In this example, the first filter is a network manager 73a that handles communication between the network and the user interface device 12. In particular, the network manager controls registration of the user interface device with the look-up service 11 and obtaining of lists of device descriptions of processor-controlled machines available on the network. The network manager 73a also handles other network events that need to be reported to the user. The next filter in the sequence is a mapper filter 73b that converts the device description acquired by the network manager 73a into a set of possible available widgets for each function of the device description. The mapper filter is followed by a company personalisation filter 73c that enables the supplier or manufacturer of at least one of the processor-controlled machines for which the user interface is being generated to place constraints on the user interface by, for example, weighting the different possible widgets for a particular function differently so that, for example, the company personalisation filter can control whether there is a preference for a particular type of widget (for example combo boxes rather than radio buttons). The company personalisation filter 73c may also control style features of the user interface such as colour by limiting the available style options.

The company personalisation filter is followed, in this example, by a user personalisation filter 73d which defines the features of the user interface that may be editable by the user such as, for example, text size, preferred window pane arrangement and so on.

The user interface application also includes a user interface filter 73i that has the function of enabling the developer of the user interface application to inhibit display of certain items to the user of the user interface device so that, for example, display screens or panes displayed to the developer during generation of the user interface application are not displayed to the user of the user interface device 12 or are modified so as to enable the user to have control over certain parameters to enable setting of user preferences. In this example, the user interface filter 73i enables the applications developer to determine which filter user interfaces can be viewed and to control the parameters that can subsequently be modified so that, for example, once the applications developer has completed the overall design of the user interface application, at least some of the filter interfaces are not viewable.

A layout manager filter 73e is then provided that arranges the remaining widgets on the screen in accordance with a layout algorithm. The layout manager filter 73e is followed by a layout renderer filter 73f which effects rendering of the panes and widgets.

The output of the layout renderer filter 73f is supplied to a data writer 73g which generates data for communication to the network to enable the user interface device to issue instructions to cause a processor-controlled machine to carry out a function. The data writer filter may be arranged as shown in Figure 9 to supply data that does not affect operation of any of the other filters directly to the network manager 73a on data line 730 or via the filter stack.

The data writer filter 73g is followed by a display filter 73h that generates from a user interface object output by the layout renderer 73f a display object to enable display of the generated user interface.

The resulting interface application may then be supplied to an authorised user in the form of the manufacturer or supplier of the user interface device (or to a manufacturer or supplier of a processor-controlled machine)as an applications package on a storage medium or as a signal over a network. Generally, the applications developer will have set the parameters of the user interface filter 73i so that the manufacturer or supplier can, using an authoring tool that enables him to view filter interfaces, access a company personalisation filter user interface (which may be modified by parameters set by the developer in the user interface filter 73i to constrain the parameters that the manufacturer or supplier can set) to set company options and preferences for the company personalisation filter 73c and then access a developer-modified interface of the user interface filter 73i that enables the manufacturer or supplier to modify the user interface filter 73i parameters only so as to hide the company personalisation filter interface from view by the end user.

The user interface application as modified by the manufacturer or supplier (the modified user interface)may then be supplied to the end user as an applications package on a storage medium or as a signal over a network. The end user may download the user interface application directly to his user interface device 12 using the remote communications interface 33, for example, in which case no user personalisation preferences will be set or may download the user interface application to his personal computer 9 and use a similar authoring tool to that used by a manufacturer or supplier to view a filter user interface for the user personalisation filter 73d and to set his personal preferences before downloading the user interface application to the user interface device 12.

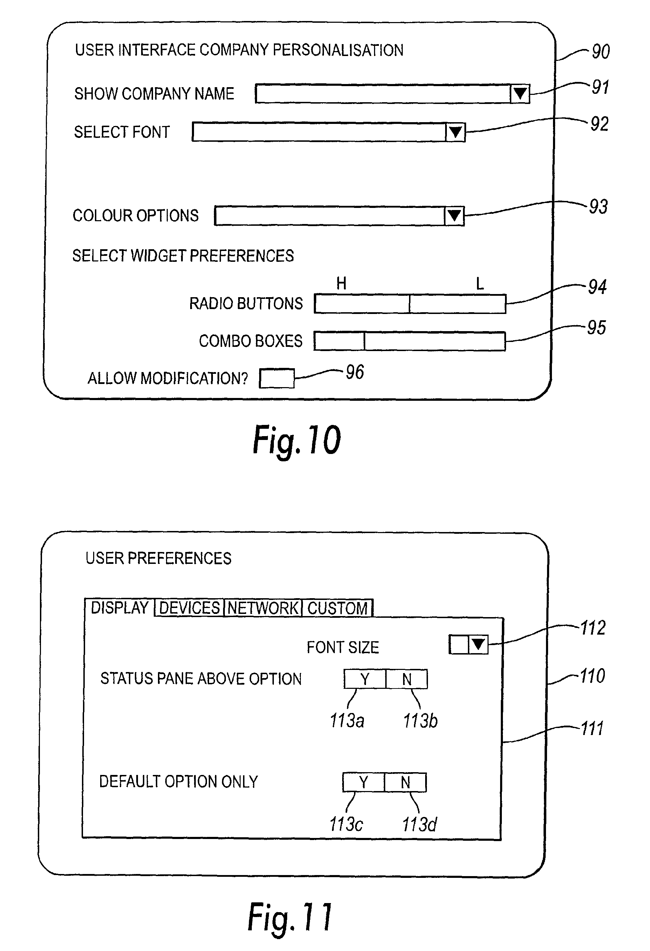

Figure 10 shows a display screen 90 illustrating an example of a company personalisation filter user interface that may be displayed to an authorised user, for example, a manufacturer or supplier of the user interface device 12. This particular interface enables a user to select a corporate style resource file by selecting the required company name from a drop down menu 91. The corporate style may define, for example, a specific font or text, a font colour, pane colours, type of widgets and whether any of these selected style features can be edited by the end user.

This company personalisation filter user interface may also have a number of further drop down menus to enable a user to define style rules for a company for which a resource file is not available. As shown, Figure 10 provides drop down menus 92 and 93 for enabling such a user to select font and colour options and also slide bars 94 and 95 for enabling the user to indicate preferences for particular types of widgets. In the example shown in Figure 10, the slide bars 94 and 95 enable a user to indicate high or low preference for radio buttons and combo boxes, respectively. The display screen also includes a check box 96 that the user checks if he wishes to allow modification of these styles by the end user.

Figures 11 to 15 show display screens of a user personal preferences filter interface.

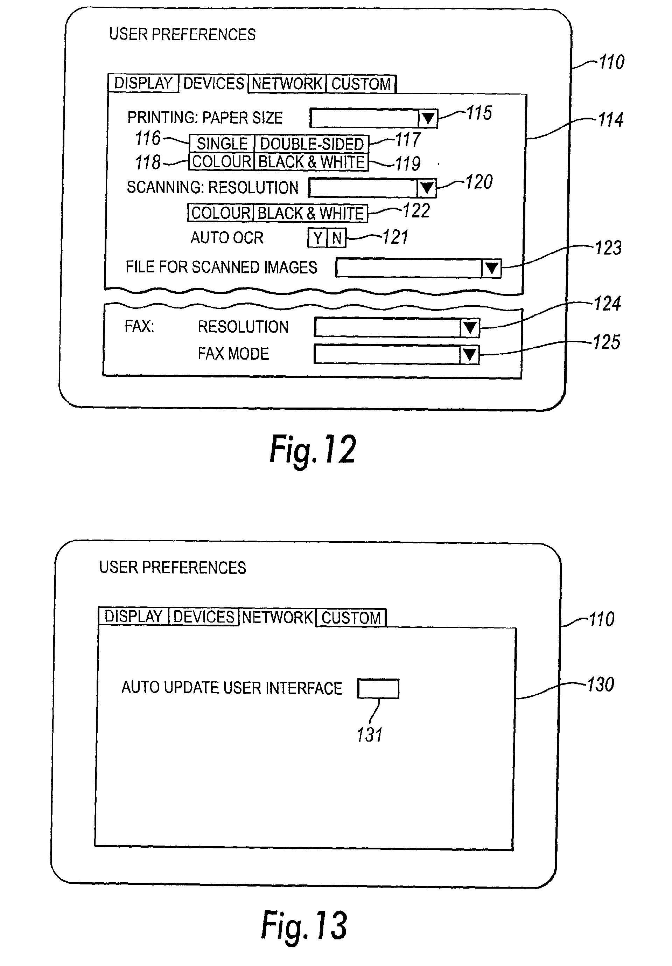

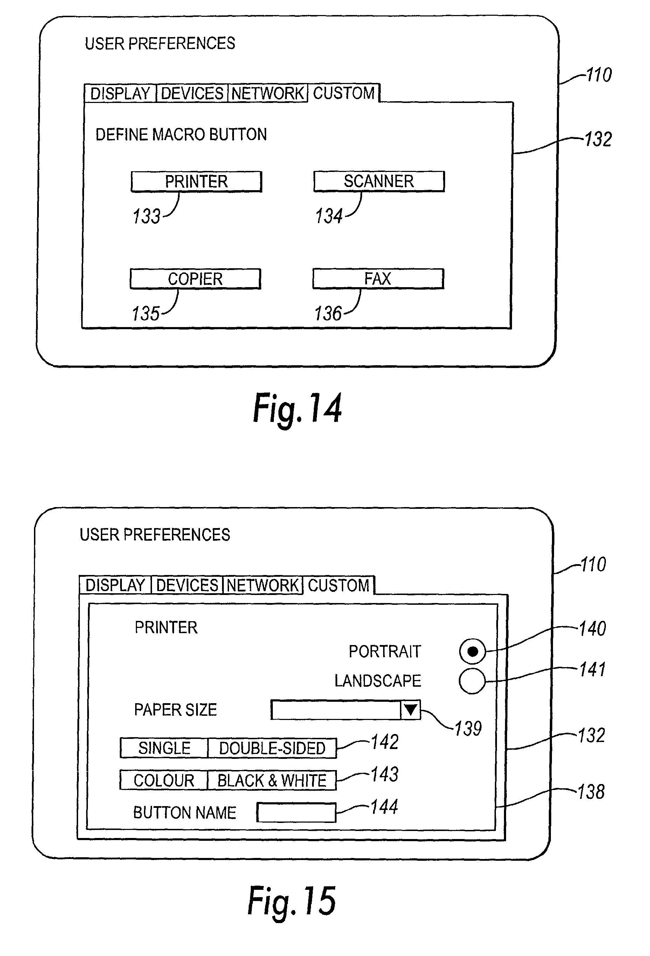

In this embodiment, the user personal preferences filter interface is, as can be seen from Figures 11 to 15, presented as a number of tabbed panes that enable the user to, while in the authoring tool, set his or her display preferences (Figure 11), default settings for the different device types that can be controlled by the user interface device (Figures 12 and 13), network options (Figure 14) and custom options (Figure 15).

Figure 11 shows a display screen 110 in which the user has selected the display options pane 111. In this example the display options include a font size drop down menu 112 that enables a user to select a font size to be used on the user interface and a layout option that enables the user to select whether a device status data pane is displayed above or below a device options pane by selecting either a YES button 113a or a NO button 113b. The display options pane 111 may also include a "default options only" selection in the form of YES and NO buttons 113 and 113d to enable the user to set a complexity level for a given function so that, for example, where the user always wants to use default values and is not interested in more advanced features, the user can elect to have only the default values shown.

Figure 12 shows the display screen 110 with a device default setting pane 114 (shown part cut-away) selected. This pane enables a user to change default settings for the various different processor-controlled machines. As illustrated, this pane includes a drop down menu 115 that enables a user to change the default printing paper size from A4 to one of a number of other available paper sizes (for example, letter, foolscap etc.) and toggle buttons 116 to 119 that enable the user to select single or double-sided printing as the default printing mode and colour or black and white printing as the default printing mode. This display pane also includes a drop down menu 120 that enables a user to change the default scanning resolution, a toggle button 121 to enable the user to select whether or not automatic optical character recognition (OCR) is to be carried out on a scanned document and a toggle button 122 for selecting either colour or black and white scanning. This example also includes a drop down menu 123 for enabling a user to change the default file in which scanned images are to be stored and drop down menus 124 and 125 to enable the user to change the default fax resolution and fax mode. Although not shown, appropriate options will also be provided for others of the processor-controlled machines. Although Figure 12 shows the settable default settings for all available processor-controlled machines on the same pane it will, of course, be appreciated that the device pane 114 may include icons for each device which, when clicked on or selected open a separate window in which the default settings can be adjusted by the user.

Figure 13 shows the display screen 110 when the network pane 130 is selected. In this example, the network pane simply includes a check box 131 for enabling a user to decide whether or not the user interface will be automatically updated in accordance with network events. such as the presence of new processor-controlled machines on the network.

Figure 14 shows the fourth pane 132 that enables a user to define a personalised widget in the form of a macro button which causes a specific processor-controlled machine to carry out a specific function in accordance with preset values determined by the user when defining the macro button. In the example shown this pane includes four buttons 133 to 136 that enable the user to select the type of processor-controlled machine for which he wishes to define the macro button. When one of these buttons is selected, then a further window or pop-up menu is presented to the user for that processor-controlled machine. Figure 15 shows a window 138 showing the options that can be selected by the user for the custom button when the printer button 133 is selected in Figure 14. In this example, the window 138 has a drop down menu 139 for selecting a paper size, radio buttons 140 and 141 for selecting portrait or landscape orientation, a toggle button 142 for selecting single or double-sided printing and a toggle button 143 for selecting colour or black and white printing plus a window 144 for enabling a user to enter a name for the macro button.

Similar windows will be displayed to the user, giving different options that may be selected for the macro button, when the user selects any of buttons 134, 135 and 136 shown in Figure 14.

Once the user has completed his personalisation of the user interface application then the user interface application is downloaded to the user interface device 12 as described above. The user interface application is accessed by the control processor 30 of the user interface device 12 whenever communication with a processor-controlled machine or device on the network N is initiated.

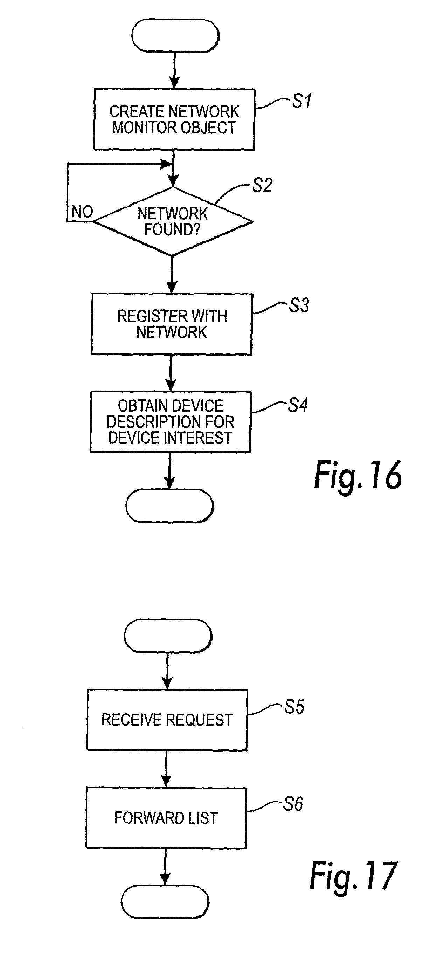

The operation of the user interface device 12 will now be described with reference to Figures 16 to 23.

When, as shown in Figure 5, the user U is in the vicinity of one of the processor-controlled machines coupled to the network, for example the printer 5, then the user interface device 12 is activated to communicate with that processor-controlled machine. The user interface device 12 may be activated by the user, for example, selecting a "get network device user interface" function from a main menu of the user interface device 12.

In response to receipt of this instruction, the user interface device 12 attempts to establish communication over the wireless link WL. When communication is established between the remote communications interface 33 of the user interface device and the remote device communications interface 24 of the processor-controlled machine 5 then the user interface device creates a network monitor object (step S1 in Figure 16), operating in its own thread that periodically searches for a network by sending out a, in this embodiment, JINI discovery message. This message is communicated via the wireless link to the remote device communications interface 24 and via the communication control apparatus 25 of the processor-controlled machine 5 to the network N. Upon receipt of a return message from the JINI look-up service 11 at step S2, the user interface device 12 registers itself with the JINI look-up service 11 (step S3) and obtains from the JINI look-up service 11 a list of processor-controlled machines available on the network (with the processor-controlled machine via which the user interface device is communicating listed first) enabling the user interface device 12 to obtain from the processor-controlled machine via which the user interface device 12 is communicating with the network, in this case the printer 5 (step S4), its device description.

Figure 17 shows the steps carried out by the JINI look-up service 11. Thus, at step S5, when the JINI look-up service receives, via the printer 5 in this case, a request for a list of processor-controlled machines available on the network, then the JINI look-up service 11 determines the processor-controlled machine in which the user interface device 12 is interested, that is, in this case, the processor-controlled machine from which the message was transmitted onto the network, and then, at step S6, forwards a list of available processor-controlled machines with the processor-controlled machine from which the message was transmitted listed first enabling the user interface device 12 to obtain the corresponding device description from the processor-controlled machine.

The device descriptions are in the form of XML documents which define the functions available from the corresponding processor-controlled machine or device. Appendices 1 and 2 show examples of printer and scanner device descriptions, respectively.

Upon receipt of the device description, the network manager filter 73a forwards it onto the mapper filter 73b (Figure 9).

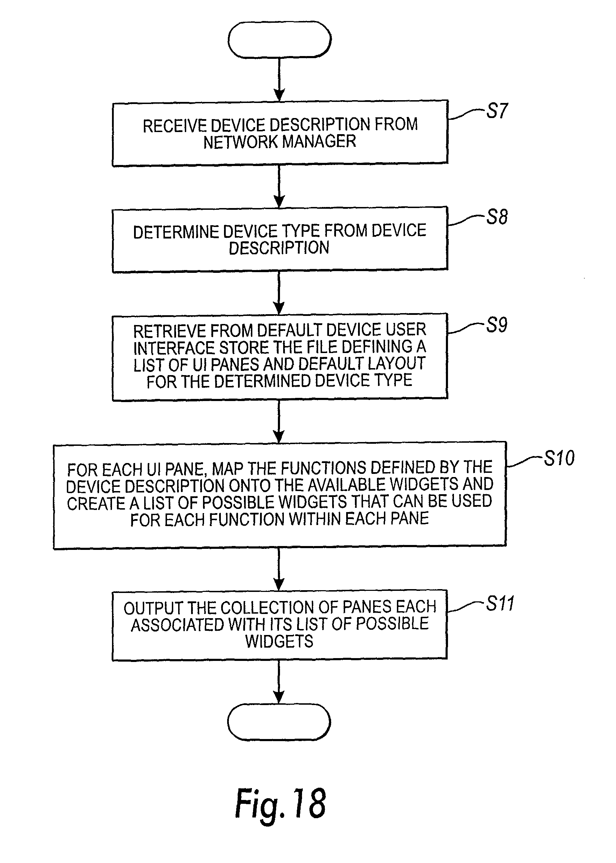

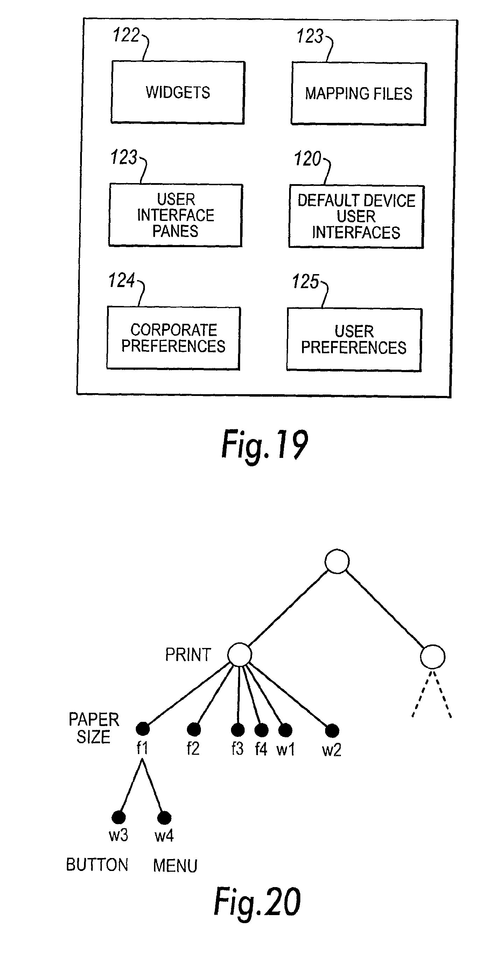

The mapper filter 73b converts the device description received from the network manager filter 73a into a set of possible alternatives widgets for each function within the device description, as will now be explained with reference to Figures 18 and 19.

Thus, at step S7 in Figure 18, the mapper filter 73b receives the device description from the network manager 73a. At step S8 the mapper filter 73b determines from the xML document forming the device description the device type, in this case it determines that the device is a printer.

The user interface application stored in the memory 31 of the user interface device includes data objects and resource files required by the user interface application during use. These are stored in the memory 31 and, as shown very diagrammatically in Figure 19, include default device user interfaces 120 for each different type of device, each consisting of a list of user interface panes and a default user interface layout for the device, user interface panes data 121 containing, for each different function user interface pane, a flexible description of how to group together widgets for that function, for example, scan option user interface pane data will specify that scan size, scan resolution, colour etc. widgets are required in the scan user interface, a file or store 122 of descriptions of XML (for example in UIML (user interface markup language)) mapping files 123 specifying for different functions (for example scan, print, copy, fax etc) mapping relationships between function options and possible alternative widgets, corporate preferences files 124 containing data representing the corporate preferences previously set as described above and user preferences files 125 containing data defining the user preferences user interface.

Once the mapper filter 73b has determined the device type from the device description (step S8 in Figure 18), then the mapper filter 73b retrieves from the stored default device user interface store 120 the data file defining the list of user interface panes and the default layout for the determined device type, in the case the printer user interface shown in Figure 6a. This default layout will include data identifying the required user interface panes as being the printer status information pane 41, the document options pane 42 and the job options pane 43 and the default layout data may indicate that the default layout is for the panes 41, 42 and 43 to be organised as shown in Figure 6a.

Then, at step S10, for each user interface pane (which, as set out above defines the required functions), the mapper filter 73b maps the functions defined by the received device description onto the available widgets stored in the widget store 122 and creates a list of possible widgets that can be used for each function within each pane. Figure 20 illustrates that this mapping process produces a hierarchical map or tree structure. Figure 20 shows an example of part of the tree structure for the functions group within the pane 43 shown in Figure 6a. Thus, the print function itself is associated with widgets w1 and w2 one of which may specify the use of a button type widget 43e as shown in Figure 6a while the other of which may specify a check box, for example. The print function is associated with a number of ancillary functions or options f1 to f4 with, in the example shown in Figure 20, the function f1 being paper size. The other functions may be, for example sort, clip and layout as shown in Figure 6a. Figure 20 shows the paper size function f1 as being associated with two widgets w3 and w4. In the interests of simplicity, the remainder of the map or tree structure is not shown in Figure 20. It will, however be appreciated that each of the functions f2 to f4 will be associated with one or more widgets such as check boxes (as shown in Figure 6a for the sort and clip options) and drop down menus (as shown in Figure 6a for the layout option).

The mapper filter 73b thus maps each possible function for each user interface pane to each possible alternative widget representation so as to generate, for each function within each user interface pane, a list of possible alternative widgets.

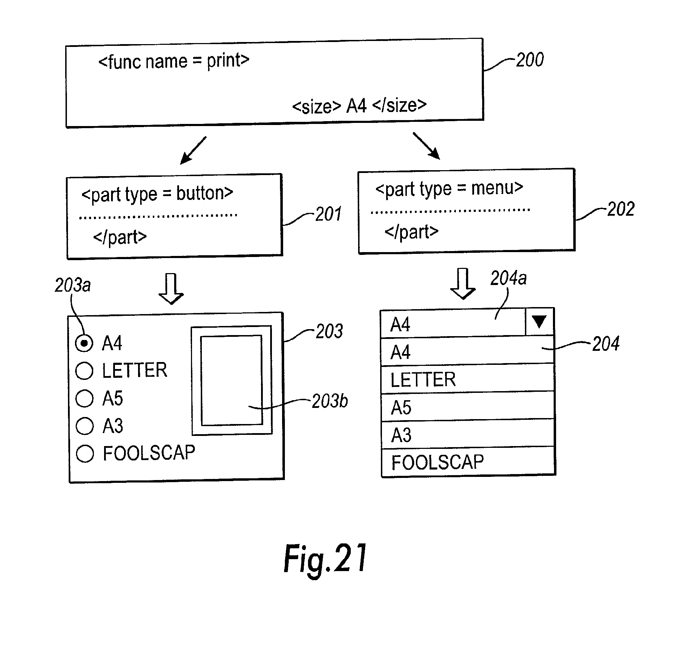

Figure 21 shows a diagram for explaining this process for the paper size function. Thus, box 200 in Figure 21 shows an XML definition of the function with, in this case, the default size being A4 while boxes 201 and 202 illustrate the UIML definitions of the button w3 and menu w4 widgets respectively, with the major portion of the code defining the content of these widgets being omitted as indicated by the ellipsis in these two boxes. Examples of the actual button and menu widgets are illustrated at 203 and 204 in Figure 21. As can be seen, in this case the button widget 203 presents a list of options each associated with a check button 203a with the A4 option being checked. This particular button also shows a representation 203b of a sheet of paper to illustrate the option selected. In the example shown in Figure 21, the drop down menu widget 204 simply consists of a list of names of different paper sizes with the default paper size, A4, being shown in the selection box 204a.

Once the mapper filter 73b has created a list of possible widgets that can be used for each function defined by the device description within each pane defined by the default device user interface, then, at step S11 in Figure 18, the mapper filter 73b outputs the collection of panes each associated with its list of possible widgets to the company personalisation filter 73c.

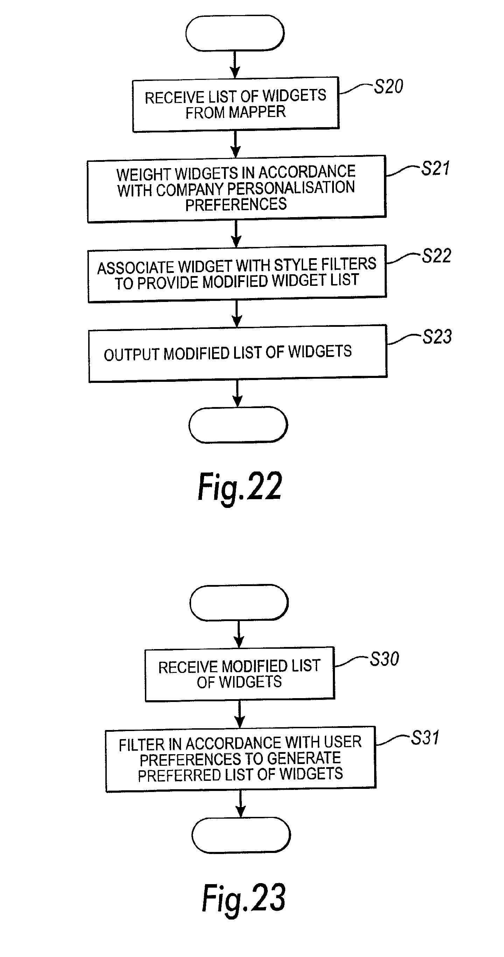

Figure 22 shows the steps carried out by the company personalisation filter. Thus, at step S20, the company personalisation filter receives the lists of widgets from the mapper filter and then, at step S21, determines from the corporate preferences store 124, whether the company preferences selected using the company personalisation filter user interface in the authoring tool (see Figure 10) include preferences for use of certain types of widgets and, if so, weights the widgets in the received list with weighting factors in accordance with these company personalisation preferences and then, at step S22, associates the widget list with style filters specified in the company personalisation file, (see Figure 10) to produce a modified widget list and at step S23, outputs the modified list. For example, the company personalisation file may specify a preference for combo boxes as opposed to radio button groups and may also specify a particular font colour or text, a particular pane and background colour or inclusion of a company logo in, for example, a title bar of a pane or any combination of these.

This modified list of widgets is received (step S30 in Figure 23) by the user preferences or personalisation filter 73d that applies the user preferences set by the user as described above with reference to Figures 11 to 15 to generate a preferred list of widgets for each user interface pane. For example, the user preferences file may, as set out above, specify an order for the user interface panes other than the default order shown in Figure 6a so that, for example, the status pane 41 is shown below the options panes. In addition, the user preferences may indicate, as shown in Figure 15, changes to the print options from the default so that, for example, the normal default paper size of A4 is changed to letter.

The final preferred list of widgets may or may not specify a particular widget for each function or option. Thus, in some cases, the results of the company personalisation and user personalisation may still leave an option of two or more widgets for a particular function or function option. In some cases, the company personalisation filter may have weighted one type of widget in preference to another. This need not necessarily be the case.

When this preferred list of widgets is supplied to the layout manager filter 73, the layout manager filter 73 arranges the widgets within each pane in accordance with a predefined algorithm. This algorithm will, to cope with the situation where the preferred list still includes two or more alternatives of equal weight, include a preference for widgets of a certain type. For example, where the display screen real estate is relatively small, then the layout algorithm may specify that, where more than one widget is available for a particular function or function option, then the widget occupying the smallest amount of real estate will be selected. The layout manager filter 73e also defines the relative positions within the display screen window and sizes of these panes so as to fit the available real estate. The layout of the user interface panes may, as described above, be the default layout specified in the default device user interface data 120 or may be specified by the user.

The data representing the laid out user interface panes is then supplied to the layout renderer filter 73f as a single user interface description. The layout renderer 73f instantiates the correct graphical user interface widgets and generates proxy objects that handle the widget events enabling the user interface application to respond to user actions such as selection of a particular widget.

The layout renderer 73f supplies the generated user interface to the data writer 73g which has the function of outputting the data to be transmitted to the network for controlling the printer in the data channel. The display filter 73h following the data writer 73g outputs in the display channel a display object generated from the user interface object provided by the layout renderer 73f to enable a user interface controller function of the control processor 30 of the user interface device to generate display signals to cause the generated user interface to be displayed on the display 32.

The user interface filter 73i has, as discussed above, the function of hiding from the user of the user interface device 12 the filter user interfaces that were used in the authoring tool to design the user interface application.

Because each filter only acts on data of the type that it expects and passes other data unaffected onto the next filter, the order of some of the other filters may be altered although, generally, the layout manager, layout renderer and display filters will be positioned after the user interface filter 73i. Thus, for example, the order of the company personalisation and user personalisation filters may be reversed. Similarly, one or both of the company personalisation and user personalisation filters may precede the mapper filter so that the available list of widgets and style filters are limited or modified in accordance with the preferences set out in the company personalisation and user personalisation filters before the mapping operation. In addition, it will be appreciated that the above description gives only possible examples of features of the user interface that may be personalised by the user or on behalf of a company and that, for example, the options for user personalisation may include some of the options described above for company personalisation and vice versa. Also, one or other or both of the company personalisation and user personalisation filters may be omitted with, in the latter case, the available widgets being determined by the developer of the user interface application. As another possibility, a single generic preferences filter may be provided.

The user of the user interface device 12 interacts with the resulting user interface in conventional manner inputting instructions (via the key input, pointing device or touch sensitive screen of the user interface device 12, for example) to control operation of the processor-controlled machine. An example of operation of the user interface device will now be described where the processor-controlled machine is the printer 5.

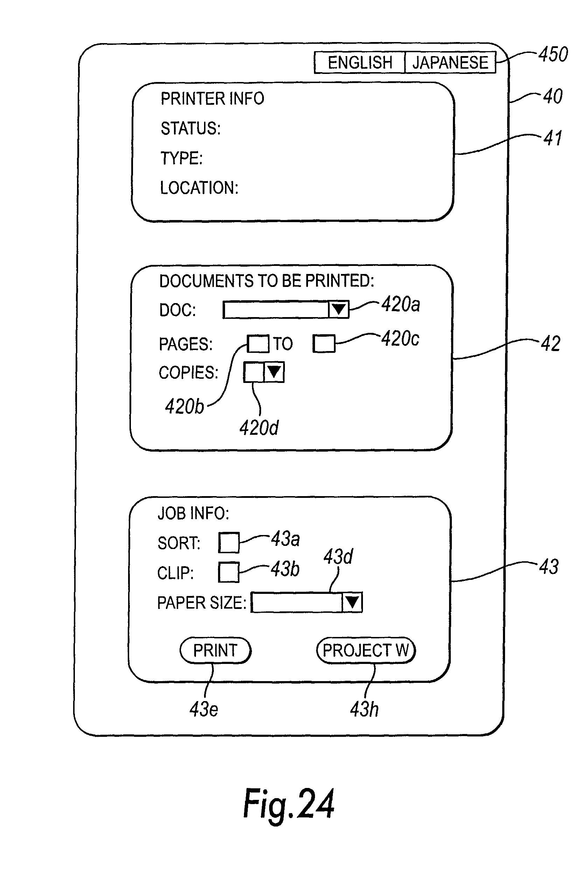

Figure 24 shows an example of a printer user interface displayed on the display screen 40 that is based on that shown in Figure 6a but personalised by the user personalisation filter. As can be seen from Figure 24, this user interface differs from that shown in Figure 6a in that the document window 42a and copies window 42d are replaced by drop down menus 420a and 420d. The drop down document menu enables the user to select a file name and file location on the network of the document that he or she desires to print. The pane 43 is also modified in accordance with the user's preferences and the functionality of the printer. Thus, in this user interface, the layout option is not present because the printer concerned is only capable of single-sided printing. In addition, the pane 43 includes a user defined macro button 43h which has been entitled by the user "project w" and specifies a set of print options defined by the user using the user preferences filter user interface (see Figures 14 and 15) for documents connected with project w.

In order to instruct the printer 5 to carry out a print operation, the user selects the document to be printed from a file store from the drop down list 420a, indicates the pages to be printed in windows 420a and 420b, selects the number of copies in the document pane 42 and completes the job information in the "job info" pane 43 indicating whether sorting and clipping is required and the desired paper size. If the user also selects the project w button 43h then the print properties required by project w will override any other selection.

Instructions input by the user are supplied by the network manager 73a of the user interface to the network for transmission to the printer that then carries out the instructed job. During this process, data will be communicated through the filter stack and each filter will process any data received from another filter, the network or the user that is of the type the filter is designed to process so that the user interface is updated in accordance with data received from the network (such as status messages indicating that the printer is busy or the job has been completed) and instructions input by the user. As described above the data writer may be arranged to supply any data of a type that is intended solely for transmission to the network directly to the network manager so that it does not have to pass through the filter stack.

The operation of the user interface device will be similar for processor-controlled machines other than the printer 5, the only differences being that the user interface provided by the user interface device, although having the same general look and feel, will be specifically adapted to provide the user with an interface to the functions of that processor-controlled machine.

Additional filters may be added by the developer to the filter sequence, depending upon the functionality of the user interface device. As an example, a historical data or undo filter may be provided that retains data identifying at least the last and possible previous states of the user interface to allow a user to undo an action. As another example, a translation filter may be provided that translates interface text (for example text or buttons or in drop down menus) from one language to another, for example English to Japanese. Different translation filters may be provided for different markets each capable of translating from one source to one or more output languages. A translation filter may also enable translation from symbols or pictorial representations or icons to natural language words. The translation filter may be designed to be directly activated by the user by providing a language selection toggle button, for example button 450 shown in Figure 24.

As another example, where the user interface device 12 is capable of receiving speech input, then the store of available widgets may include widgets that identify the existence of a speech input option and provide a prompt for the user to input the correct spoken commands. In this case, the user interface device 12 may itself be provided with speech recognition software or may be adapted to communicate, via the processor-controlled machine, with a speech server or apparatus coupled to the network as described in the Canon's copending European application publication number: EP 1054391 A3, the whole contents of which are hereby incorporated by reference.

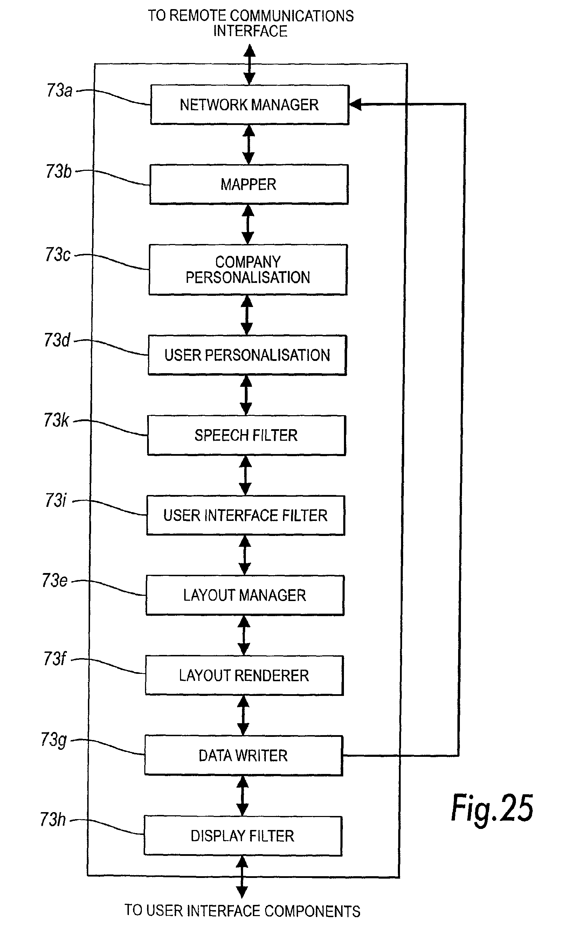

In this case, as shown in Figure 25, the sequence of filters of the user interface application includes a speech filter 73k that acts on the received list of widgets to modify those widgets to which speech input is possible. This modification may simply affect the style of the widgets by, for example, causing the widgets to be displayed using a colour that is allocated solely to widgets have a speech input option and using a particular font or style of font (for example by emboldening the text) to indicate to the user that speech input is available. Incorporation of the speech filter in this manner means that it is not necessary for the processor-controlled machines or any other device coupled to the network to know that the user interface device 12 has speech input capabilities.

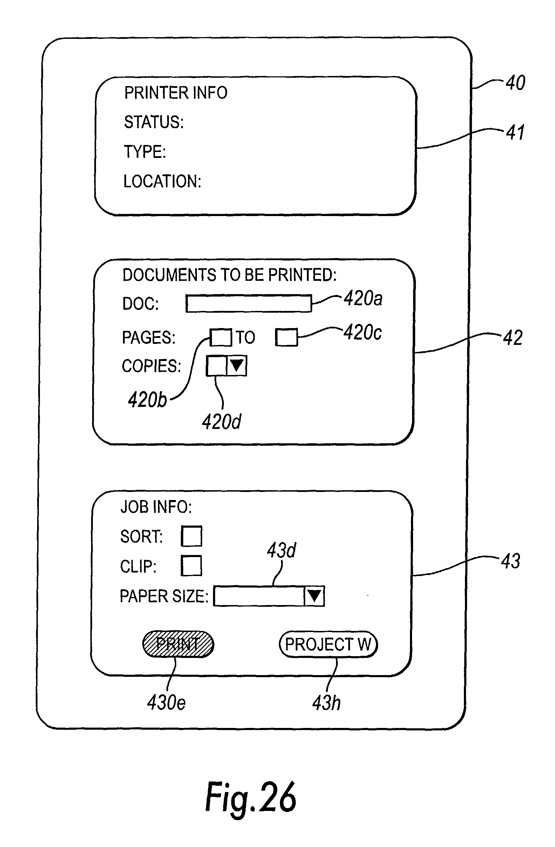

The speech filter 73k may modify the text shown on or within a widget to include a prompt for a spoken command. This is illustrated in Figure 26 where the print button 430e is shown in grey to illustrate that it is of a specific colour and the text on the print button is shown in quote marks to illustrate that a spoken command "PRINT" can be input.

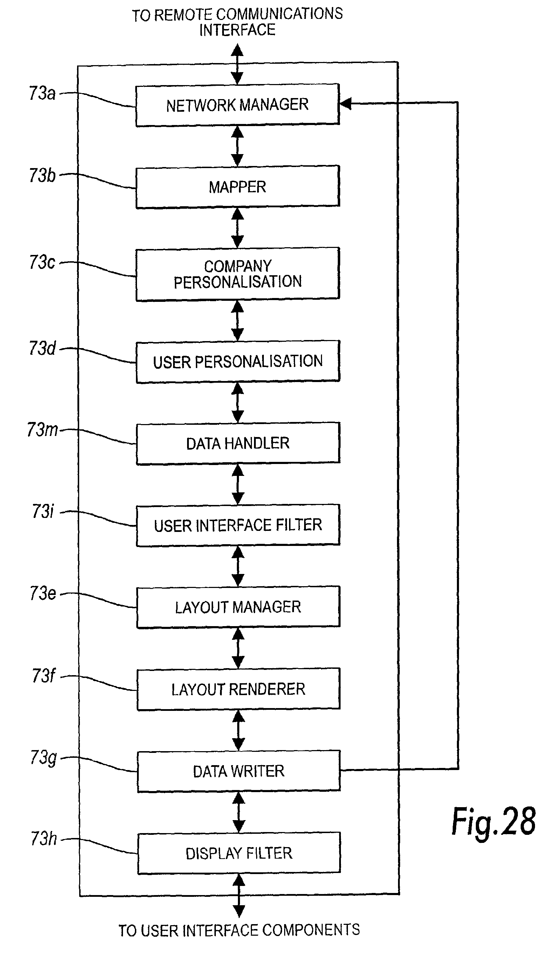

Figure 28 shows a functional block diagram similar to Figure 25 wherein the user interface application includes a data handler filter 73m rather than a speech filter 73k. The data handler filter 73m is arranged to handle automatically in accordance with parameters of the data handler filter 73m (set by one or any combination of the manufacturer or supplier of the user interface device, the manufacturer or supplier of a processor-controlled machine and the end user) certain types of received data that would normally be supplied to the user simply as information, for a decision or for processing. As an example, the user interface application may, from time to time, receive messages from the network in relation to a job or function that the user has instructed a processor-controlled machine to carry out. For example, a message may be returned that the processor-controlled machine is busy or has a fault, and so on. Generally, this information would simply be displayed to the user in the status pane (panes 41 and 51 in Figures 6a and 6b, for example). However, where the data handler filter 73m is provided, then the parameters of this filter may be set so that, when such status information is received, the data handler filter provides an instruction to the data writer filter 73g to submit the particular job to that processor-controlled machine again at a later time.

As another example, the data handler filter parameters may be selected so that when the data handler 73 receives a message that the selected processor-controlled machine is busy, it diverts this message without alerting the user and causes the requested job to be resubmitted at a later time whereas when the message received indicates that the processor controlled machine is malfunctioning or is not communicating correctly with the network, then this message may be passed on for display to the user in the status pane. This means that, for example, the user need not concern himself with status type event messages for events that last only for a relatively short period of time. As another possibility, the data handler may include parameters for incoming data to be stored automatically at specific file store addresses on the network or at the user interface device itself, depending upon the type of data received or upon the nature of the data or identification information accompanying or forming part of the data. This would enable, for example, the user to specify that scanned document data should be transferred for storage in a specific file while images generated using the digital camera 7 should be stored in a separate different file which may be at a different location on the network, without the user having to issue instructions each time regarding the file store to be used.

In the above described embodiments, the user interface device 12 communicates with the network N via a specific processor-controlled machine whose identity is included in the communications with the JINI look-up service 11 so enabling the processor-controlled machine at which the user interface device is located to be determined. In the above described embodiments, the JINI look-up service 11 sends a list of available processor-controlled machines. It may, however, just identify the processor-controlled machine via which the user interface device 12 is communicating to enable the user interface device to obtain the device description for that processor-controlled machine.

Depending upon the number of processor-controlled machines coupled to the network, device descriptions for all processor-controlled machines on the network may be supplied to the user interface device when it first communicates with the network with the device description for the device at which the user interface device 12 is located being placed first on the list and so being passed by the network manager 73a to the mapper filter 73b to generate the appropriate device user interface.

Where all of the device descriptions are provided to the user interface device 12, then the user interface device may store these for future use, if it has the memory capacity. If the user interface device has stored copies of the device descriptions, when the user wishes to use the user interface device to control a particular processor-controlled machine coupled to the network, then, once the user interface device has established communication with the network, the JINI look-up service determines from the message supplied by the processor-controlled machine through which the user interface device is communicating with the network the device ID of that processor-controlled machine and returns this to the user interface device so that the user interface device can generate the user interface for that processor-controlled machine.

In the above described embodiments, the wireless link WL is a radio link. Another wireless communications system may be used. For example, the processor-controlled machines and the user interface device 12 may be provided with infrared (IR) transceivers enabling the user interface device 12 to communicated via IR. In both cases, the communications control apparatus 25 of the processor-controlled machine with which the user interface device 12 is communicating forms a server for the user interface device 12 so that it send a request to the JINI look-up service that results in the user interface device being sent the device description for its "local" device (that is the processor-controlled machine of which the communications control apparatus forms a part) from that "local" device.

In the above described embodiments, the JINI look-up service 11 identified the processor-controlled machine at which the user interface device 12 is located because messages from the user interface device are communicated over the network via that processor-controlled machine which adds its identity to the message provided by the user interface device. As another possibility, the user interface device may incorporate a bar code (or other code or ID) reader 35 (see Figure 3) and each of the processor-controlled machines may carry a unique bar code (or other code or ID) which is read by the user interface device 12 and communicated over the network to the JINI service to enable it to identify the processor-controlled machine at which the user interface device is located.

The communication control apparatus 25, which in the embodiments described above forms a server for the user interface device 12, may be provided within the same housing as the rest of the processor-controlled machine or as a separate module or unit.

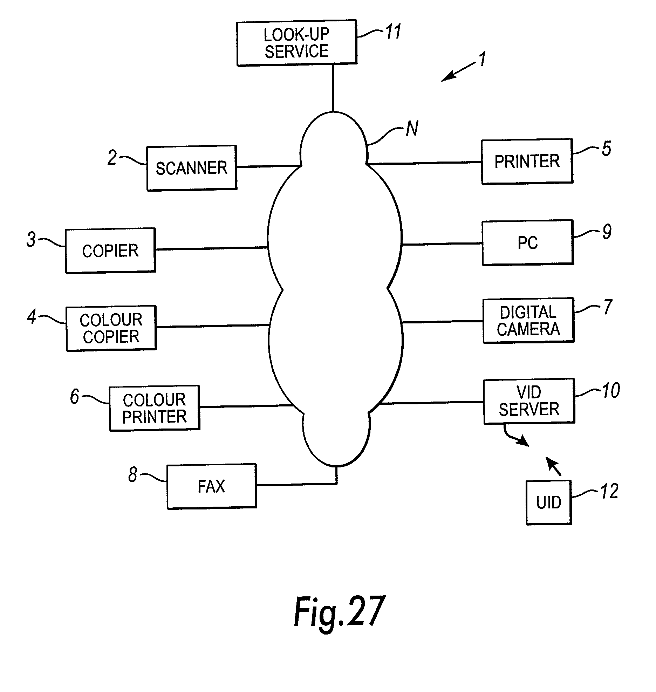

In the above described embodiments, the user interface device communicates with the network via one of the processor-controlled machines with the communications apparatus 25 of the processor-controlled machines effectively forming a server for the user interface device 12. The user interface device may, however, communicate directly with the network, in which case the remote communications interface 33 will be a network communications interface rather than a wireless link communications interface. In this case, the JINI look-up service 11 may act as the user interface device server or a separate user interface device server 10 may be provided on the network N as shown in Figure 27 so that, in either of these cases, it is not necessary for the processor-controlled machine to be able to communicate with the user interface device. In these cases, the user interface device server, rather than processor-controlled machine, will be provided with the remote device communications interface enabling a wireless link to be established between the user interface device server and the user interface device. The processor-controlled machines need then only be able to communicate with the network. In this case, when such a processor-controlled machine registers itself with the JINI look-up service 11, the user interface device server (or base station) 10 is notified via the JINI look-up service and, in response, forwards notification of registration and the device description from the processor-controlled machine to the user interface device 12. In this case, each of the processor-controlled machines coupled to the network will be provided with a bar code readable by the bar code reader and incorporating data identifying the device so that, when this bar code is read by the bar code reader 35 of the user interface device, the user interface device can communicate the data contained in the bar code over the network enabling identification of the processor-controlled machine at which the user interface device is located.

A user of a user interface device may, in some circumstances, wish to issue instructions to control a processor-controlled machine when the user interface device is not located in the vicinity of that processor-controlled machine. In this case, once the user interface device establishes communication over the network with the JINI look-up service, then the user interface device 12 may ask for a list of the processor-controlled machines currently coupled to the network and this list may then be displayed on a main user interface to enable the user to select the processor-controlled machine that he wishes to use, enabling the user interface device to then obtain the appropriate device description.

In the above described embodiments, the user interface device 12 is instructed by the user to establish communication with a processor-controlled machine. The communications control apparatus 25 of each of the processor-controlled machines may, as another possibility, form a base station that periodically emits signals in accordance with the wireless link protocol so that when an active user interface device 12 comes within range of the emitted signals, the user interface application is activated automatically.

In the above described embodiments, the user interface device 12 itself stores the user interface application and generates the user interfaces. As another possibility, the JINI look-up service 11 shown in Figure 11 or the user interface device server 10 shown in Figure 27 may provide a user interface provider service so that the user interface application is stored at, and the user interface is generated by, the look-up service 11 or user interface server 10, as the case may be. the user interface is then supplied over the network to the user interface device 12, enabling the user interface device to be a relatively low power, low processing capability device. In this case, when the user interface device 12 establishes communication with the network (either directly or via a specific processor-controlled machine), then the user interface device 12 asks the user interface provider service to construct or generate the requisite user interface by forwarding to the user interface provider service information identifying the respective device description file (or the actual file). Such a centrally generated user interface may be provided so as to be accessible by a number of different users each using their own user interface device. In this case, the facility to set user preferences may be omitted or the user reference data may be generated using the personal computer 9 as described above and then downloaded to a store accessible by the interface provider service so that the interface provider service can extract the appropriate user preferences data in accordance with the identity of the user interface device requesting the user interface.

Regardless of whether the user interface device 12 itself generates the user interface, the user interface device 12 may be provided with facilities for enabling the user to set user preferences in a manner similar to that described above with reference to Figures 11 to 15. Thus, in the case where the user interface application is present on the user interface device 12, then the user interface filter 73i will have parameters set so that the user preferences filter user interface is available to the user of the user interface device. In contrast, when the user interface application is associated with a user interface provider service, then the user preferences filter user interface may be downloaded from the user interface provider service upon request from the user of the user interface device 12.

As another example, where the user interface device 12 itself has sufficient power, processor capability and memory, for example where the user interface device comprises part of a laptop computer, then not only generation of the user interface during use but also construction of the user interface application may be effected directly on the user interface device 12 using an authoring tool that defines certain filter elements as essential and others as optional so that the user can build the user interface application themselves but without necessarily having to understand in detail operation of the user interface application.

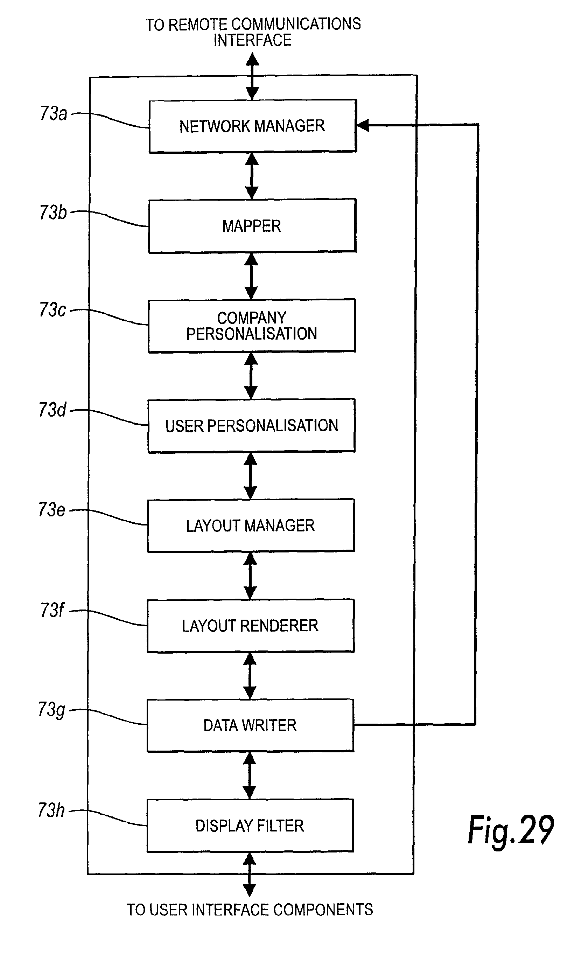

In the above embodiments, the user interfaces that enable a developer, manufacturer or supplier to change filter parameters form part of the final user interface and a user interface filter is provided so that the end user cannot see certain filter user interfaces. The user interface applications developer's interface may, however, be separate from the final user interface application and be provided by a separate user interface application that need not necessarily have a filter type architecture. In this case, the company personalisation and user interface filters will include their own filter user interfaces and the user interface filter will simply allow the manufacturer or supplier to prevent the end user seeing the company personalisation filter interface. As another possibility, the manufacturer or supplier's user interface may also be separate from the final user interface application and need not necessarily have a filter type architecture. As a further possibility, the company personalisation filter may be selected by the applications developer from a number of different company personalisation filters available to him so that it is not necessary for the manufacturer or supplier to be involved in customising the user interface application, they simply need to supply a company personalisation filter to the applications developer. In either of these latter cases, then, as shown in Figure 29, the user interface filter 73i may be omitted.

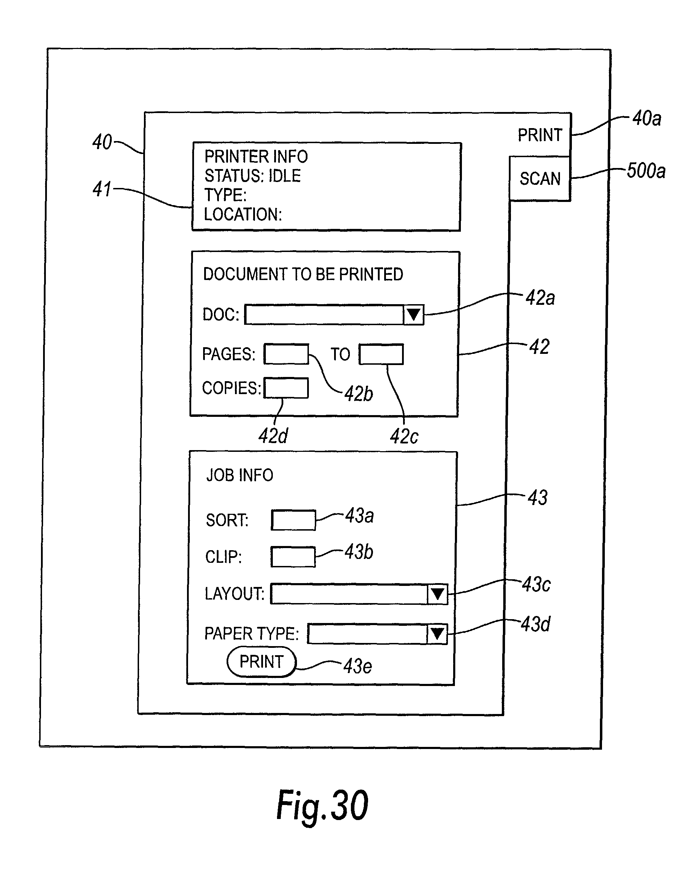

In the above described embodiments, the user interface device displays a single interface at a time. The layout manager filter may however be adapted to display the interfaces as tabbed panes so that two or more interfaces can be shown simultaneously one on top of the other as tabbed panes. Figure 30 shows simultaneous display of the printer interface 40 and a scanner interface with printer and scanner tabs 40a and 500a being provided to enable the user to switch quickly between the two interfaces.

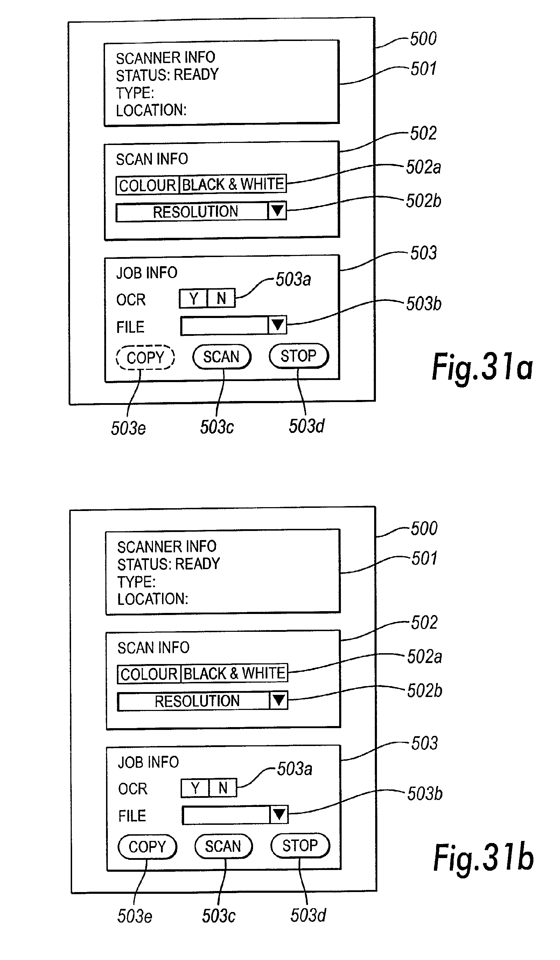

The network manager filter 73a may be arranged to register a device listener requesting that it be informed by the JINI look-up service 11 when a processor-controlled machine of a certain type has been coupled to the network and to cause a current user interface being displayed to the user to inform the user of the availability of the new processor-controlled machine. Figures 31a and 30b illustrate an example of the usefulness of this facility.
Figure 31a shows a scanner user interface 500 having status, scan information and job information panes 501, 502 and 503 with, in this example, the scan information pane 502 including a colour/black & white selection toggle button 502a and a scan resolution selection drop down menu 502b while the job information pane 503 has an OCR yes or no selection toggle button 503a, a file selection drop down menu 503b for selecting the file in which scanned data is to be stored and SCAN and STOP buttons 503c and 503d for starting and stopping a scan. Figure 31a also shows a greyed-out COPY button 503e. When the user interface device provides this scan interface to a user, the network manager 73a registers a device listener requesting that it be informed by the JINI look-up service 11 of the availability on the network of a suitable printer and, when it is advised by the JINI look-up service that a suitable printer is available, then the COPY button is, as shown in Figure 31b, made active indicating to the user that he can generate a copy of the scanned document. As another possibility, the COPY button may not be present at all until the network manager is advised of the existence of a suitable printer.

Such a device listener may also be registered by the network manager where, for example, the processor-controlled machine being controlled is a digital camera, in which case, for example, a PRINT button will be greyed-out or not present until the device listener determines the existence of a suitable printer.

The device listener registered by the network manager 73a may simply request that it be advised of the availability of any printer or may require the printer to have particular functions (such as the ability to print in colour or with a particular quality or resolution).

The user interface device 12 may be a dedicated user interface device that has no other functions. Also, as mentioned above, the user interface device 12 may be provided by a laptop computer. As another possibility, the user interface device may be a personal digital assistant that, in addition to the user interface application includes other applications or programs such as, for example, word processing, spreadsheet, calender, diary and other similar applications each of which will have their own user interface that is independent of the user interface application. Where the user interface device has supplied local memory then when the processor-controlled machine is a printer coupled to the network N, the document to be printed may be a document stored locally by the user interface device. As another example, the user interface device may comprise a mobile or DECT telephone having sufficient display real estate to enable display of a graphical user interface to the user. In this case, where the data handler filter 73m shown in Figure 28 is provided, then one of the parameters set by the data handler filter 73m may be that, where the user is currently using the user interface device, incoming voice or text messages from the telecommunications network to which the telephone is connected will be automatically diverted to a voice mail facility without disturbing the user. In a more sophisticated data handler filter 73m, the user may be able to set preferences or parameters for the data handler filter enabling the user to specify that all incoming voice messages should be diverted to voice mail except for messages from specific telephone numbers, so enabling the user to elect only to be interrupted by messages from specific telephone numbers or to elect to store incoming text messages or email or to be alerted to the receipt of certain text messages or email, dependent upon the sender's identity. Where the user interface device has telecommunications facilities and facility for handling incoming telecommunications data is not required by the user, then a separate telecommunications data path may be provided that does not pass through the filter stack.

In the above described embodiments, the user interface is a graphical user interface. Other interfaces are possible such as a speech interface (which would involve inclusion of a speech recognition filter and also a speech generator filter) or a combined speech and graphical user interface. As far as a spoken interface is concerned, user personalisation may involve selecting parameters to determine the level at which the spoken dialogue is conducted with the user (so that a user familiar with the spoken interface of a processor-controlled machine need not have the same prompts as a novice) and generation of speech macro commands, that is spoken analogues of the project w button mentioned above. Similarly company personalisation for a spoken interface may involve how the processor-controlled machine is identified in the dialogue, the type of prompts that can be used and language selection facilitating localisation of the spoken interface for the language requirements of different countries. Even in the case of a fully graphical user interface, if it is not possible to identify functions by symbols or words that will be understood throughout the world market, then the device descriptions may include different language versions of text that may be presented (for example on buttons or in drop down menus) in the graphical user interface and a language selection filter may be provided to select the appropriate language version for the country to which the user interface device is to be supplied. Alternatively or additionally, a language selection parameter may be included in at least one of the company and user personalisation filters.

As described above, a default user interface may be provided as part of the resources of the user interface application. As another possibility, default user interfaces may be provided by the processor-controlled machines.

In the above described embodiments, the user interface device is separate from the processor-controlled machines and may be carried around by the user from processor-controlled machine to machine. As another possibility, a processor controlled machine may have an integrated user interface device. In this case, where the user interface device 12 includes the user interface application, then the device description may be stored by the processor-controlled machine and user preferences data accessed from the look-up service 11 in accordance with the identity of the particular user which may be determined by, for example, the user inputting an ID code to the user interface device or by an identity tag (such as a proximity identity tag) worn or carried by the user. Where the user interface is not generated by the user interface device but is generated by the look-up service 11 in Figure 1 or the user interface device server 10 shown in Figure 27, then, when the user interface device 12 is activated by a user, the user will be identified as described above and the user identity and device description sent by the processor-controlled machine to the user interface provider which will then generate the user interface and return it to the processor-controlled machine for display to the user.

Although the above described embodiments use a JAVA-based JINI look-up service it will, of course, be appreciated that different operating platforms and different look-up services may be used. Also, although the use of a filter-based architecture for the user interface application facilitates changes and upgrades because the individual filters are independent of one another, the user interface application need not necessarily use the filter based architecture. Also, in the above described embodiments, the device descriptions are provided as XML documents. However, other mark-up languages may be used and the device description need not necessarily be provided as marked-up documents, the only necessity being that the device descriptions are provided in a form that is compatible with the user interface application.

Where the processor-controlled machine provides video data, then the user interface device may be adapted to display that video data and also to enable the user to select and track a feature ("hot spot") through the video frames.

In the above described embodiments, the processor-controlled machines are items of office equipment. The present invention may, however, be applied in other environments such as, for example, the home environment where the processor-controlled machines coupled to the network may consist of, for example, items of equipment such as VCRs, televisions, DVD players, stereo systems and so on and even kitchen equipment such as microwaves, ovens, dishwashers, washing machines and the like.

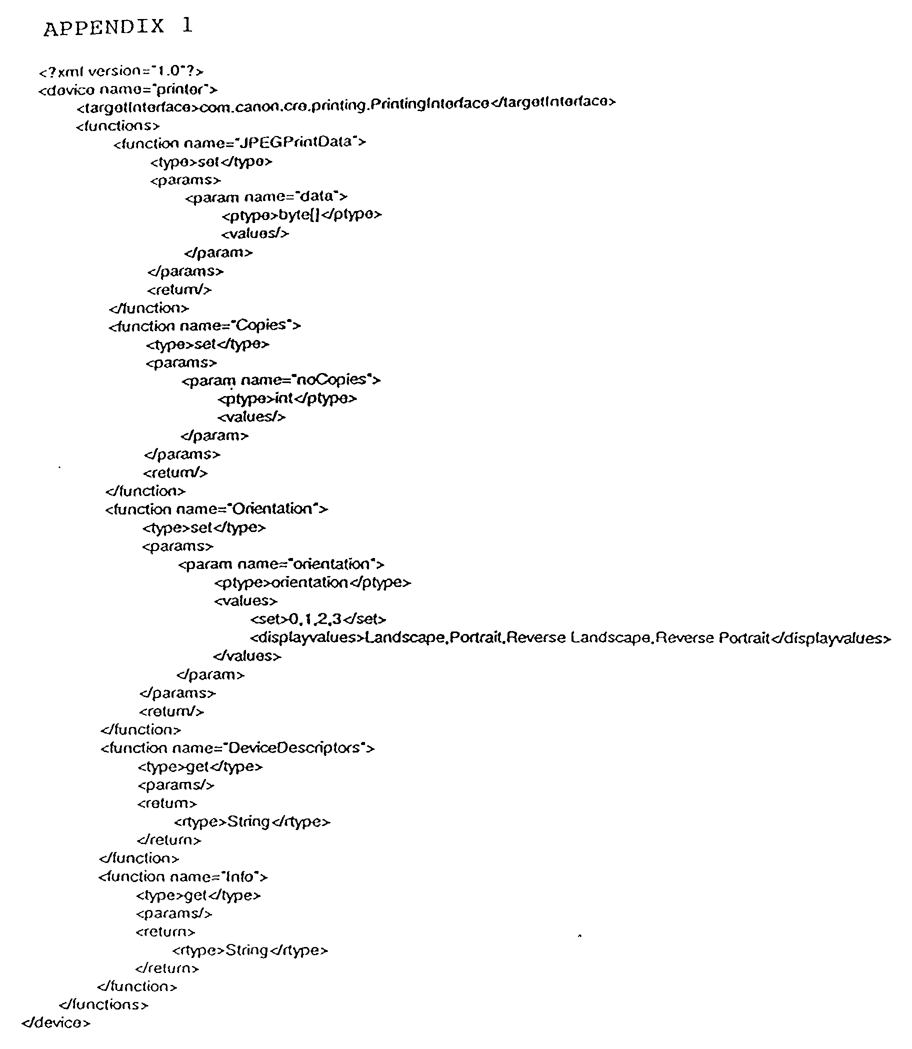

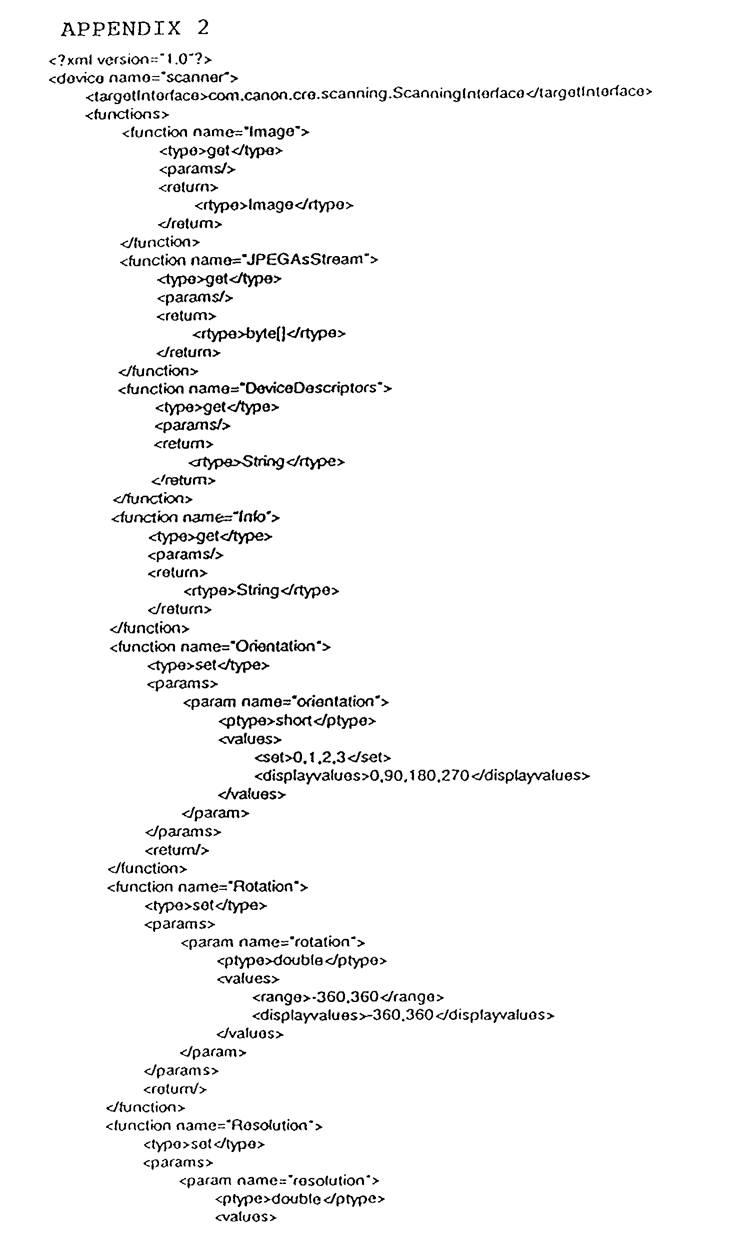

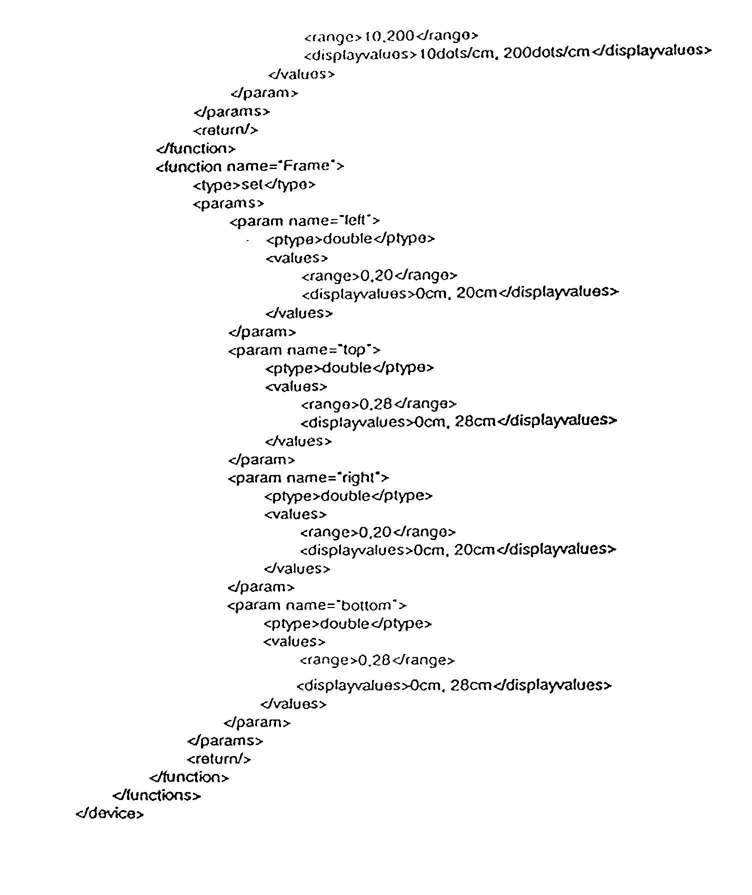

## Claims

1. User interface apparatus for enabling a user to communicate with a processor-controlled machine, the apparatus comprising user interface defining means comprising:
communicating means for communicating with the processor-controlled machine to enable the user of the user interface to cause the processor-controlled machine to carry out a function;
receiving means for receiving device description data provided by the processor-controlled machine and defining the functional capabilities of that processor-controlled machine;
user interface element accessing means for accessing user interface element data defining user interface elements that can be used to form a user interface;
associating means for associating the functional capabilities in the received device description data with user interface elements defined by the user interface element data; and
generating means for generating user interface data defining a user interface using the user interface element data for the user interface elements associated with the functional capabilities defined by the device description data.

2. User interface apparatus for enabling a user to communicate with a processor-controlled machine to cause that processor-controlled machine to carry out a function, the apparatus comprising user interface defining means comprising:
communicating means for communicating with the processor-controlled machine to enable the user of the user interface to cause the processor-controlled machine to carry out a function;
receiving means for receiving device description data provided by the processor-controlled machine and defining the functional capabilities of that processor-controlled machine;
user interface element accessing means for accessing user interface element data defining user interface elements that can be used to form a user interface;
associating means for associating functional capabilities in the received device description data with user interface elements defined by the user interface element data to provide user interface element option data in which at least one functional capability is associated with at least two possible alternative user interface elements;
preference means for providing preference data regarding user interface element preferences;
user interface element determining means for determining using the user interface element option data and the preference data the user interface elements to be used to represent the functional capabilities of processor-controlled machine; and
generating means for generating user interface data defining a user interface using the user interface element data for the user interface elements associated with the functional capabilities defined by the device description data.

3. User interface apparatus according to claim 2, wherein the preference means is operable to provide preference data defining preferences of at least one of the user of the user interface apparatus and the supplier of the user interface apparatus.

4. User interface apparatus according to claim 2 or 3, wherein the preference means is operable to provide preference data defining at least one of preferences for different types of user interface elements; preferences for the style of presentation of user interface elements and preferences for layout of user interface elements.

5. User interface apparatus according to claim 2 or 3, wherein the preference means is operable to provide preference data defining at least one of preferences for different types of user interface elements such as button, menu or combo box type user interface elements and user interface element style preferences such as at least one of colour, font, font size to be used for user interface elements.

6. User interface apparatus according to any one of the preceding claims, wherein the user interface comprises a graphical user interface and the apparatus further comprises a display for displaying the user interface to a user.

7. User interface apparatus according to any one of the preceding claims, comprising user interface data supplying means for supplying generated user interface data to a user interface device.

8. User interface apparatus according to any one of the preceding claims, wherein the communicating means is operable to communicate with a number of different processor-controlled machines and the receiving means is operable to receive device description data provided by any of said number of different processor-controlled machines and defining the functional capabilities of that processor-controlled machine.

9. User interface apparatus according to any one of the preceding claims, wherein the communicating means is operable to communicate directly with a processor-controlled machine.

10. User interface apparatus according to any one of the preceding claims, wherein the communicating means is operable to communicate with a processor-controlled machine via a network to which the processor-controlled machine is coupled.

11. User interface apparatus according to any one of the preceding claims, wherein the receiving means is operable to receive device description data via the communicating means.

12. User interface apparatus according to any one of the preceding claims, wherein the receiving means is operable to receive device description data directly from a processor-controlled machine.

13. User interface apparatus according to any one of the preceding claims, wherein the receiving means is operable to access device description data using a look-up service provided by a network to which the processor-controlled machine is coupled.

14. User interface apparatus according to any one of the preceding claims, wherein the user interface defining means is provided by processor means and associated memory storing a user interface application implementable by the processor means.

15. User interface apparatus according to claim 14, wherein the user interface application comprises a plurality of separate program modules or fitters.

16. User interface apparatus according to claim 15, wherein the communicating means, receiving means, user interface element accessing means, associating means, and generating means comprise respective different program modules.

17. User interface apparatus according to claim 15 when dependent on claim 2, wherein the communicating means, receiving means, user interface element accessing means, associating means, preference means, user interface element determining means and generating means comprise respective different program modules.

18. A processor controlled machine for use with a user interface apparatus in accordance with any one of claims 1 to 17, having function means for carrying out at least one function; machine communicating means for communicating with the user interface device to enable the user of the user interface to cause the processor-controlled machine to carry out a function; and device description data providing means for providing device description data defining the functional capabilities of the processor-controlled machine.

19. A processor controlled machine according to claim 18, wherein the function means is operable to carry out a printing function.

20. A processor controlled machine according to claim 18 or 19, wherein the function means is operable to carry out a facsimile communication function.

21. A processor controlled machine according to claim 18, 19 or 20, wherein the function means is operable to carry out a copying function.

22. A processor controlled machine according to claim 18, 19, 20 or 21, wherein the function means is operable to carry out a scanning function.

23. A system comprising a user interface apparatus in accordance with any one of claims 1 to 15 and at least one processor-controlled machine in accordance with any one of claims 18 to 22.

24. A system comprising a user interface apparatus in accordance with any one of claims 1 to 15 and a plurality of processor-controlled machines in accordance with any one of claims 18 to 22 adapted to communicate over a network.

25. A system comprising a user interface apparatus in accordance with any one of claims 1 to 15, a plurality of processor-controlled machines in accordance with any one of claims 18 to 22 couplable to a network and a network look-up service adapted to stored data relating to the processor controlled machines.

26. A system according to claim 24 or 25, further comprising the network.

27. A system comprising: a plurality of processor-controlled machines each having function means for carrying out at least one function, network communicating means for communicating with a network, and device description data providing means for providing device description data defining the functional capabilities of the processor-controlled machine; and a user interface apparatus for enabling a user to communicate with any one of said processor-controlled machines when that processor-controlled machine is coupled to the network to cause that processor-controlled machine to carry out a function, the user interface apparatus comprising a user interface display for displaying a user interface to the user and user interface defining means comprising:
network communicating means for establishing communication with the network to enable the user of the user interface to cause one of the processor-controlled machines coupled to the network to carry out a function; receiving means for receiving, when the network communicating means has established communication with the network, device description data provided by the one processor-controlled machine directly from the and defining the functional capabilities of that processor-controlled machine;
user interface element accessing means for accessing user interface element data defining user interface elements that can be used to form a user interface; associating means for associating the functional capabilities in the received device description data with user interface elements defined by the user interface element data; and
generating means for generating user interface data defining a user interface for display on the display using the user interface element data for the user interface elements associated with the functional capabilities defined by the device description data.

28. A system comprising: a plurality of processor-controlled machines each having function means for carrying out at least one function, network communicating means for communicating with a network, and device description data providing means for providing device description data defining the functional capabilities of the processor-controlled machine; and a user interface apparatus for enabling a user to communicate with any one of said processor-controlled machines when that processor-controlled machine is coupled to the network to cause that processor-controlled machine to carry out a function, the user interface apparatus comprising a display for displaying a user interface to the user and user interface defining means comprising:
network communicating means for establishing communication with the network to enable the user of the user interface to cause one of the processor-controlled machines coupled to the network to carry out a function; receiving means for receiving, when the network communicating means has established communication with the network, device description data provided by the one processor-controlled machine and defining the functional capabilities of that processor-controlled machine;
user interface element accessing means for accessing user interface element data defining user interface elements that can be used to form a user interface; associating means for associating functional capabilities in the received device description data with user interface elements defined by the user interface element data to provide user interface element option data in which at least one functional capability is associated with at least two possible alternative user interface elements;
preference means for providing preference data regarding user interface element preferences;
user interface element determining means for determining using the user interface element option data and the preference data the user interface elements to be used to represent the functional capabilities of processor-controlled machine;
generating means for generating user interface data defining a user interface for display on the display using the user interface element data for the user interface elements associated with the functional capabilities defined by the device description data.

29. A system according to claim 27 or 28, wherein the user interface display is provided by a separate user interface device and the user interface apparatus has user interface data supplying means for supplying the user interface data to the user interface device via the network.

30. A system according to claim 27, 28 or 29, further comprising a look-up service couplable to the network and operable to provide the user interface apparatus, when communication has been established by the network communicating means, with data relating to or identifying the device description data for said one processor-controlled machine.

31. A method of providing a user interface device with a user interface to enable a user to use the user interface device to cause a processor-controlled machine to carry out a function, the method comprising processor means carrying out the steps of :
communicating with the processor-controlled machine to enable a user of the user interface device to cause the processor-controlled machine to carry out a function;
receiving device description data defining the functional capabilities of that processor-controlled machine;
accessing user interface element data defining user interface elements that can be used to form a user interface;
associating the functional capabilities in the received device description data with user interface elements defined by the user interface element data; and
generating user interface data defining a user interface using the user interface element data for the user interface elements associated with the functional capabilities defined by the device description data.

32. A method of providing a user interface device with a user interface to enable a user to use the user interface device to cause a processor-controlled machine to carry out a function, the method comprising processor means carrying out the steps of :
communicating with the processor-controlled machine to enable a user of the user interface device to cause the processor-controlled machine to carry out a function;
receiving device description data provided by the processor-controlled machine and defining the functional capabilities of that processor-controlled machine;
accessing user interface element data defining user interface elements that can be used to form a user interface;
associating functional capabilities in the received device description data with user interface elements defined by the user interface element data to provide user interface element option data in which at least one functional capability is associated with at least two possible alternative user interface elements;
accessing preferences data regarding user interface element preferences;
determining using the user interface element option data and the preference data the user interface elements to be used to represent the functional capabilities of processor-controlled machine; and
generating user interface data defining a user interface for display on a display using the user interface element data for the user interface elements associated with the functional capabilities defined by the device description data.

33. A method according to claim 32, wherein the accessing preferences data step accesses preference data defining preferences of at least one of the user of the user interface device and the supplier of the user interface device.

34. A method according to claim 32 or 33, wherein the accessing preferences data step accesses preference data defining at least one of preferences for different types of user interface elements; preferences for the style of presentation of user interface elements and preferences for layout of user interface elements.

35. A method according to claim 32 or 33, wherein the accessing preferences data step accesses preference data defining at least one of preferences for different types of user interface elements such as button, menu or combo box type user interface elements and user element style preferences such as at least one of colour, font, font size to be used for user interface elements.

36. A method according to any one of claims 31 to 35, further comprising displaying the user interface on the display.

37. A method according to any one of claims 31 to 36, further comprising supplying the user interface data to a user interface device having a display for displaying the user interface.

38. A method according to any one of claims 31 to 37, wherein in the communicating step the processor means communicates with one of a number of different processor-controlled machines and in the receiving step receives device description data provided by said one of said number of different processor-controlled machines processor-controlled machine and defining the functional capabilities of that processor-controlled machine.

39. A method according to any one of claims 31 to 38, wherein the communicating step comprises direct communication with the processor-controlled machine.

40. A method according to any one of claims 31 to 39, wherein the communicating step comprises communicating with the processor-controlled machine via a network to which the processor-controlled machine is coupled.

41. A method according to any one of claims 31 to 40, wherein the receiving step comprises receiving device description data via the communication path used in the communicating step.

42. A method according to any one of claims 31 to 41, wherein the receiving step comprises receiving device description data directly from the processor-controlled machine.

43. A method according to any one of claims 31 to 42, wherein the receiving step comprises accessing device description data using a look-up service provided by a network to which the processor-controlled machine is coupled.

44. A method according to any one of claims 31 to 43, wherein the processor means carries out the claimed steps by implementing a user interface application stored in an associated memory.

45. A method according to claim 44, wherein the user interface application comprises a plurality of separate program modules or fitters.

46. A method according to claim 45, wherein the processor means carries out the communicating step, receiving step, accessing user interface element data step, associating step, and generating step by implementing respective different ones of the program modules.

47. A method according to claim 45 when dependent on claim 32, wherein the processor means carries out the communicating step, receiving step, accessing user interface element data step, associating step, accessing preference data step, user interface element determining step and generating step by implementing respective different ones of the program modules.

48. A method of providing a user interface device with a user interface to enable a user to use the user interface device to cause one of a plurality of processor-controlled machines coupled to a network to carry out a function, the method comprising processor means carrying out the steps of:
establishing communication with the network to enable the user of the user interface to cause one of the processor-controlled machines coupled to the network to carry out a function;
receiving, when communication has been established with the network, device description data provided by the one processor-controlled machine and defining the functional capabilities of that processor-controlled machine;
accessing user interface element data defining user interface elements that can be used to form a user interface;
associating the functional capabilities in the received device description data with user interface elements defined by the user interface element data; and
generating user interface data defining a user interface using the user interface element data for the user interface elements associated with the functional capabilities defined by the device description data.

49. A method of providing a user interface device with a user interface to enable a user to use the user interface device to cause one of a plurality of processor-controlled machines coupled to a network to carry out a function, the method comprising processor means carrying out the steps of:
establishing communication with the network to enable the user of the user interface to cause one of the processor-controlled machines coupled to the network to carry out a function;
receiving, when communication has been established with the network, device description data provided by the one processor-controlled machine defining the functional capabilities of that processor-controlled machine;
accessing user interface element data defining user interface elements that can be used to form a user interface;
associating functional capabilities in the received device description data with user interface elements defined by the user interface element data to provide user interface element option data in which at least one functional capability is associated with at least two possible alternative user interface elements;
accessing preference data regarding user interface element preferences;
determining using the user interface element option data and the preference data the user interface elements to be used to represent the functional capabilities of processor-controlled machine; and
generating user interface data defining a user interface for display on a display of the user interface device using the user interface element data for the user interface elements associated with the functional capabilities defined by the device description data.

50. A method according to claim 48 or 49, wherein the processor means comprises part of the user interface device.

51. A method according to claim 48, 49 or 50, further comprising, when communication has been established with the network, providing the user interface device with data relating to or identifying the device description data for said one processor-controlled machine from a look-up service coupled to the network.

52. A user interface apparatus according to any one of claims 1 to 17, further comprising:
user settable data handling parameter defining means having at least one parameter settable by a user; and
data handling means for handling received data in accordance with at least one data handling parameter set by the user.

53. A user interface apparatus according to claim 52, wherein the data handling means is operable to divert an incoming message so that the user is not made aware of the message.

54. A user interface apparatus according to claim 52 or 53, wherein the data handling means is operable to send received data to a location determined by at least one parameter set by the user.

55. A method according to any one of claims 31 to 51, further comprising the processor means carrying out the steps of:
enabling a user to set at least one data handling parameter;
receiving data from a processor controlled machine; and
handling the received data in accordance with the at least one parameter set by the user.

56. A method according to claim 55, wherein the data handling step diverts an incoming message so that the user is not made aware of the message.

57. A user interface apparatus according to claim 55 or 56, wherein the data handling step sends received data of a type or identify defined by a user set parameter to a location determined by at least one parameter set by the user.

58. A user interface apparatus according to any one of claims 1 to 17, further comprising:
user interface modifying means for modifying the user interface in response to data identifying the availability of another processor-controlled machine.

59. A user interface apparatus according to claim 58, wherein the user interface modifying means is operable to make available a copy or print user interface function in response to data identifying the availability of a printer.

60. A carrier carrying processor implementable instructions for causing a processor to carry out a method in accordance with any one of claims 31 to 51 and 55 to 57.

61. A storage medium comprising processor implementable instructions for causing a processor to carry out a method in accordance with any one of claims 31 to 51 and 55 to 57.
